(19) Europäisches Patentamt
European Patent Office
Office européen des brevets

(11) **EP 2 511 316 B1**

(12) # EUROPEAN PATENT SPECIFICATION

(45) Date of publication and mention
of the grant of the patent:
**27.08.2014   Bulletin 2014/35**

(21) Application number: **10835678.3**

(22) Date of filing: **03.12.2010**

(51) Int Cl.:
*C08G 18/66* [(2006.01)]      *C08L 75/04* [(2006.01)]
*C08G 18/42* [(2006.01)]      *C08G 18/40* [(2006.01)]
*C08G 18/12* [(2006.01)]      *C08G 18/28* [(2006.01)]
*C08F 283/00* [(2006.01)]      *C08G 18/73* [(2006.01)]

(86) International application number:
**PCT/JP2010/007047**

(87) International publication number:
**WO 2011/070751 (16.06.2011 Gazette 2011/24)**

(54) **THERMOPLASTIC URETHANE RESIN**

THERMOPLASTISCHES URETHANHARZ

RÉSINE D'URÉTHANE THERMOPLASTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **10.12.2009   JP 2009281032**

(43) Date of publication of application:
**17.10.2012   Bulletin 2012/42**

(73) Proprietor: **Sanyo Chemical Industries, Ltd.
Kyoto-shi, Kyoto 605-0995 (JP)**

(72) Inventors:
• **TSUDO, Yasuhiro
Kyoto-shi
Kyoto 605-0995 (JP)**

• **INABA, Masaki
Kyoto-shi
Kyoto 605-0995 (JP)**
• **WATANABE, Shinji
Kyoto-shi
Kyoto 605-0995 (JP)**

(74) Representative: **Kotitschke & Heurung
Partnerschaft mbB
Eduard-Schmid-Str. 2
81541 München (DE)**

(56) References cited:
**WO-A1-2008/087964      CA-A1- 2 678 773
JP-A- 2000 017 033      JP-A- 2008 053 725**

**Description**

TECHNICAL FIELD

The present invention relates to a thermoplastic urethane resin.

BACKGROUND ART

Hitherto, in order to improve bondability to a core cloth, water-resistant washability, and dry cleaning resistance, suggestions have been made about a hot melt adhesive made of a thermoplastic polyurethane resin about which the difference between the softening start temperature and the softening end temperature, and the softening start temperature are set to specified ranges, the temperatures being according to a thermomechanically analytic needle-penetrating mode. It is stated that this adhesive is used also as a material for slush molding (see, for example, Patent Document 1).

About resin particles used for powder coating, electrophotographic toner, or electrostatic toner, suggestions have been made about resin particles which are meltable at low temperature by adjusting the crystallinity degree, the melting point and the molecular weight. It is stated that the particles are used as a material for slush molding (see, for example, Patent Documents 2 and 3).

Patent Document 4 discloses a thermoplastic polyurethane powder for slush molding which is prepared from poly(butylene adipate), poly(hexamethylene isophthalate), 1-octanol, diisocyanate, polycarbodiimide, forming an NCO-prepolymer which is chain-extended by a ketimine compound.

PRIOR ART DOCUMENTS

PATENT DOCUMENTS

Patent Document 1: JP 10-259369 A
Patent Document 2: JP 2010-150535 A
Patent Document 3: JP 2010-189633 A
Patent Document 4: CA 2 678 773 A

SUMMARY OF THE INVENTION

PROBLEMS TO BE SOLVED BY THE INVENTION

However, it is desired that a material for slush molding, in particular, a material that is favorably applicable to interiors of automobiles satisfies requirements that the material is excellent in meltability when the material is subjected to slush molding, and a molded body therefrom is excellent in tensile strength and elongation, and the like. When attention is paid to polyurethane based materials, a material for slush molding that sufficiently satisfies all of these properties has not yet been known.

An object of the present invention is to provide a material for slush molding that is excellent in low-temperature meltability, and gives a molded body excellent in both of tensile strength and elongation.

MEANS FOR SOLVING THE PROBLEMS

In order to solve the above-mentioned problems, the present inventors have made eager investigations to achieve the present invention.

Thus, the present invention is a thermoplastic urethane resin (D) for thermal molding, which is a thermoplastic urethane resin yielded by causing a high molecular weight diol (A) to react with a diisocyanate (B), wherein the high molecular weight diols (A) comprise a polyester diol (A1) having a glass transition temperature of 0 to 70°C, and a high molecular weight diol (A2) having a solubility parameter lower than the solubility parameter of the (A1) by 1.2 to 3.0 and further having a glass transition temperature of -40 to -75°C; thermoplastic urethane resin particles (K) for thermal molding which comprise the thermoplastic urethane resin (D) for thermal molding; a urethane resin particle composition (P) for slush molding which comprises the thermoplastic urethane resin particles (K) for thermal molding, and an additive (F); and a urethane resin molded body obtained by thermally molding the thermoplastic urethane resin particles (K) for thermal molding or the urethane resin particle composition (P) for slush molding.

EFFECTS OF THE INVENTION

The urethane resin particle composition (P) for slush molding, which contains the thermoplastic urethane resin (D) of the present invention for thermal molding, is excellent in low-temperature meltability, and further gives a molded body excellent in tensile strength and elongation.

MODE FOR CARRYING OUT THE INVENTION

The thermoplastic urethane resin (D) of the present invention for thermal molding [hereinafter abbreviated to the urethane resin (D)] is a thermoplastic urethane resin yielded by causing high molecular weight diols (A) to react with a diisocyanate (B), wherein the high molecular weight diols (A) comprise a polyester diol (A1) having a glass transition temperature of 0 to 70°C, and a high molecular weight diol (A2) having a solubility parameter lower than the solubility parameter of the (A1) by 1.2 to 3.0 and further having a glass transition temperature of -40 to -75°C.
The polyester diol (A1) has a glass transition temperature of 0 to 70°C.
Examples of the polyester diol (A1) include diols each yielded by polycondensing an aliphatic diol having 2 to 4 carbon atoms and an aromatic dicarboxylic acid.
Examples of the aliphatic diol having carbon atoms 2 to 4 include ethylene glycol, 1,3-propanediol, and 1,4-butanediol. Of these examples, preferred is ethylene glycol.
Examples of the aromatic dicarboxylic acid include terephthalic acid, isophthalic acid, orthophthalic acid, t-butylisophthalic acid, 2,6-naphthalenedicarboxylic acid, and 4,4'-biphenyldicarboxylic acid.
Of these examples, preferred are one or more phthalic acids (G) selected from the group consisting of terephthalic acid, isophthalic acid, and orthophthalic acid. Particularly preferred are a mixture of terephthalic acid and isophthalic acid, and a mixture of terephthalic acid and orthophthalic acid. Most preferred is a mixture of terephthalic acid and isophthalic acid.
The polyester diol (A1) is specifically a polyester diol (A11) comprising, as essential components, ethylene glycol and one or more phthalic acids (G) selected from the group consisting of terephthalic acid, isophthalic acid, and orthophthalic acid; and a polyester diol (A12) comprising, as essential components, the (G) and tetramethylene glycol.
Of these examples, preferred is the (A11) from the viewpoints of the tensile strength and the elongation of the molded body.
In the present invention, the "phthalic acid" denotes at least one selected from the group consisting of terephthalic acid, isophthalic acid, and orthophthalic acid.
The polyester diol (A1) is yielded by polycondensing an aliphatic diol having 2 to 4 carbon atoms and an aromatic dicarboxylic acid or an ester-formable derivative thereof [such as an acid anhydride (for example, phthalic anhydride), a lower alkyl ester (for example, dimethyl terephthalate) or an acid halide (for example, phthalic chloride)].
The aromatic dicarboxylic acid component contained in the polyester diol may be a single ingredient, or may be composed of two or more ingredients.
When the acid component is composed of two ingredients, examples thereof include a mixture of terephthalic acid and isophthalic acid, one of terephthalic acid and orthophthalic acid, and one of isophthalic acid and orthophthalic acid. The ratio by mole therebetween is usually 50/50.
If the glass transition temperature (hereinafter the temperature may be referred to as the Tg) of the polyester diol (A1) is lower than 0°C, the heat resistance of the urethane resin (D) deteriorates. If the Tg is higher than 70°C, the high molecular weight diols (A) become high in melting point not to easily undergo urethanization reaction.
The Tg of the (A1) is preferably from 10 to 60°C, and more preferably from 20 to 50°C.
The number-average molecular weight of the polyester diol (A1) is preferably from 800 to 5000, more preferably from 800 to 4000, and most preferably from 900 to 3000.
The high molecular weight diol (A2) has a solubility parameter (hereinafter, the parameter may be referred to as the SP value) lower than the SP value of the polyester diol (A1) by 1.2 to 3.0, and preferably by 1.5 to 2.5.
About the urethane resin (D) of the present invention, it appears that the difference between the SP value of the polyester diol (A1) and that of the high molecular weight diol (A2) is large so that the two diols undergo micro phase separation, whereby the polyester diol (A1) forms hard segments of the elastomer and the high molecular weight diol (A2) forms soft segments thereof.
The value of [the SP value of the (A1)] - [the SP value of the (A2)] is represented by the ΔSP.
If the ΔSP is less than 1.2, the (A1) and the (A2) are good in compatibility with each other so that both of the (A1) and the (A2) function as the soft segments. Thus, the tensile strength does not become high.
The high molecular weight diols (A) the ΔSP of which is more than 3.0 are separated into two phases when the diols undergo urethanization reaction. Thus, it is difficult to render the high molecular weight diols (A) a urethane resin.
The high molecular weight diol (A2) has a glass transition temperature of -40 to -75°C.
If the Tg is higher than -40°C, the urethane resin (D) deteriorates in tensile physical properties at low temperatures (for example, at -35°C). An ordinary thermoplastic urethane resin having a Tg lower than -75°C is not obtained.

Examples of the high molecular weight diol (A2) include a polyester diol (A21) yielded by polycondensing an aliphatic diol and an aliphatic dicarboxylic acid, a polyester diol (A22) synthesized from a lactone monomer, a polyether diol (A23), and a polyetherester diol (A24).

In the polyester diol (A21), the aliphatic diol is preferably an aliphatic diol having 2 to 10 carbon atoms. Specific examples thereof include ethylene glycol, propylene glycol, 1,4-butanediol, neopentyl glycol, 1,6-hexaneglycol, and 1,10-decanediol.

The aliphatic dicarboxylic acid is preferably an aliphatic dicarboxylic acid having 4 to 15 carbon atoms. Specific examples thereof include succinic acid, adipic acid, azelaic acid, sebacic acid, fumaric acid, and maleic acid.

The polyester diol (A22) may be a polyester diol yielded by polymerizing a lactone having 4 to 12 carbon atoms as the lactone monomer, examples of the lactone including γ-butyrolactone, γ-valerolactone, ε-caprolactone; or any mixture of two or more thereof.

Examples of the polyether diol (A23) include compounds each yielded by adding an alkylene oxide to a compound having two hydroxyl groups (for example, the above-mentioned low molecular weight diols and dihydric phenolic compounds). Examples of the dihydric phenolic compounds include bisphenols [such as bisphenol A, bisphenol F, and bisphenol S], and monocyclic phenolic compounds [such as catechol and hydroquinone].

Of these examples, preferred are compounds each yielded by adding an alkylene oxide to a dihydric phenolic compound, and more preferred are compounds each yielded by adding ethylene oxide (hereinafter referred to as EO) to a dihydric phenolic compound.

Examples of the polyetherester diol (A24) include diols each yielded by using, instead of the low molecular weight diol that is a raw material for the above-mentioned polyester diol, the above-mentioned polyether diol, and diols each yielded by polycondensing one or more of the above-mentioned polyether diols and one or more of the dicarboxylic acids given as the examples of a raw material for the above-mentioned polyester diol. Specific examples of the above-mentioned polyether diols include polyethylene glycol, polypropylene glycol, and polytetramethylene glycol.

The high molecular weight diol (A2) is preferably a high molecular weight diol containing no ether bond from the viewpoints of heat resistance and light resistance. Particularly preferred are polyester diols each made from ethylene glycol and an aliphatic dicarboxylic acid having 6 to 15 carbon atoms, and polyester diols each made from an aliphatic diol having 4 to 10 carbon atoms and an aliphatic dicarboxylic acid having 4 to 15 carbon atoms. Of these diols, preferred are polyethylene adipate, polytetramethylene adipate, polyhexamethylene adipate, and polyhexamethylene isophthalate.

The number-average molecular weight of the high molecular weight diol (A2) is preferably from 800 to 5000, more preferably from 800 to 4000, and in particular preferably from 900 to 3000.

The glass transition temperature is measured by differential scanning calorimetry (DSC).

Instrument: RDC220 Robot DSC [manufactured by Seiko Instruments Inc.]

Measuring condition: the amount of the sample = 5 mg

(1) The temperature is raised from -100°C to 100°C at a temperature-raising rate of 20°C/min., and the sample is kept at 100°C for 10 minutes.
(2) The temperature is cooled from 100°C to -100°C at a cooling rate of -90°C/min., and the sample is kept at -100°C for 10 minutes.
(3) The temperature is raised from -100°C to 100°C at a temperature-raising rate of 20°C/min.

Analyzing method: the intersection between tangential lines on a peak of a DSC curve obtained at the time of the second temperature-raising step is defined as the glass transition temperature.

The solubility parameter is calculated by the Fedors method.

The solubility parameter is represented by the following equation.

$$\text{SP value } (\delta) = (\Delta H/V)^{1/2}$$

wherein $\Delta H$ represents the molar evaporation heat (cal/mol), and V represents the molar volume ($cm^3$/mol).

For $\Delta H$ and V, the following may be used: the total ($\Delta H$) of the respective molar evaporation heats of atomic groups, the heats being described in "POLYMER ENGINEERING AND FEBRUARY, 1974, Vol. 14, No. 2, ROBERT F. FEDORS (pp. 151-153)", and the total (V) of the respective molar volumes thereof descried in the same.

The SP value is an index for representing the following: samples near to each other in this value are easily mixed with each other (the compatibility is high) ; and samples apart from each other in this value are not easily mixed with each other.

The high molecular weight diols (A) comprise a polyester diol (A1) and a high molecular weight diol (A2); when the (A2) is a polyester diol (A21), it is preferred that a polyester diol (A3) described below is further incorporated. The incorporation of the diol (A3) makes the melting point of the diols (A) low to improve the diols (A) in handleability.

A polyester diol (A3) : a polyester diol comprising, as essential components, ethylene glycol, an aliphatic diol having 4 to 10 carbon atoms, one or more phthalic acids (G) selected from the group consisting of terephthalic acid, isophthalic acid and orthophthalic acid, and an aliphatic dicarboxylic acid having 4 to 15 carbon atoms.

A preferred example of the (A3) is a polyester diol yielded by causing a polyester diol (A1) and a polyester diol (A21) to undergo transesterification reaction at 160 to 220°C.

The blend ratio (by weight) of the (A1) to the (A21), (A1)/(A21), is preferably from 0.5 to 5.

The content of the (A3) is preferably from 5 to 100% by weight, more preferably from 5 to 70% by weight thereof, and most preferably from 5 to 50% by weight thereof, based on the weight of the (A1)

Examples of the diisocyanate (B), which constitutes the urethane resin (D) of the present invention, include (i) aliphatic diisocyanates having 2 to 18 carbon atoms (which do not include any carbon in its NCO groups; hereinafter, the same matter is applied to any description) [ethylenediisocyanate, tetramethylenediisocyanate, hexamethylenediisocyanate (HDI), dodecamethylenediisocyanate, 2,2,4-trimethylhexamethylenediisocyanate, lysinediisocyanate, 2,6-diisocyanatomethyl caproate, bis(2-isocyanatoethyl) fumarate, bis(2-isocyanatoethyl) carbonate, and 2-isocyanatoethyl-2,6-diisocyanatohexanoate] ; (ii) alicyclic diisocyanates having 4 to 15 carbon atoms [such as isophoronediisocyanate (IPDI), dicyclohexylmethane-4,4'-diisocyanate (hydrogenated MDI), cyclohexylenediisocyanate, methylcyclohexylenediisocyanate (hydrogenated TDI), and bis(2-isocyanatoethyl)-4-cyclohexene] ; (iii) aromatic aliphatic diisocyanates having 8 to 15 carbon atoms [such as m- and/or p-xylylenediisocyanate(s) (XDI) and $\alpha,\alpha,\alpha',\alpha'$-tetramethylxylylenediisocyanate (TMXDI)]; aromatic polyisocyanates, specific examples of which include 1,3- and/or 1,4-phenylene diisocyanate, 2,4-and/or 2,6-tolylenediisocyanate(s) (TDI), crude TDI, 2,4'- and/or 4,4'-diphenylmethanediisocyanate(s) (MDI), 4,4'-diisocyanatobiphenyl, 3,3'-dimethyl-4,4'-diisocyanatobiphenyl, 3,3'-dimethyl-4,4'-diisocyanatodiphenylmethane, crude MDI, 1,5-naphthylenediisocyanate, 4,4',4"-triphenylmethanetriisocyanate, and m- and p-isocyanatophenylsulfonylisocyanates; (v) modified products of these diisocyanates (modified diisocyanates each having a carbodiimide group, a urethodione group, a urethoimine group, a urea group, or some other group); and any mixture of two or more thereof. Of these examples, preferred are aliphatic diisocyanates or alicyclic diisocyanates, and particularly preferred are HDI, IPDI and hydrogenated MDI.

The urethane resin (D) of the present invention is yielded by causing high molecular weight diols (A) to react with a diisocyanate (B). It is preferred to cause this resin to react further with a low molecular weight diamine or low molecular weight diol (C).

Specific examples of the low molecular weight diamine or low molecular weight diol (C) are as follows.

Examples of aliphatic diamines include alicyclic diamines having 6 to 18 carbon atoms [such as 4,4'-diamino-3,3'-dimethyldicyclohexylmethane, 4,4'-diaminodicyclohexylmethane, diaminocyclohexane, and isophoronediamine]; aliphatic diamines having 2 to 12 carbon atoms [such as ethylenediamine, propylenediamine, and hexamethylenediamine] ; aromatic aliphatic diamines having 8 to 15 carbon atoms [such as xylylenediamine and $\alpha, \alpha, \alpha', \alpha'$ -tetramethylxylylenediamine]; and any mixture of two or more thereof. Of these examples, preferred are the alicyclic diamines and the aliphatic diamines. Particularly preferred are isophoronediamine and hexamethylenediamine.

Specific examples of the low molecular weight diol include aliphatic diols having 2 to 8 carbon atoms [such as linear diols (such as ethylene glycol, diethylene glycol, 1,3-propanediol, 1,4-butanediol, 1,5-pentanediol, and 1,6-hexanediol), and diols having a branched chain (such as propylene glycol, neopentyl glycol, 3 -methyl-1,5-pentanediol, 2 ,2-diethyl-1,3-propanediol, and 1,2-, 1,3- or 2,3-butanediol)]; diols having a cyclic group [such as diols containing an alicyclic group having 6 to 15 carbon atoms (such as 1,4-bis(hydroxymethyl)cyclohexane and hydrogenated bisphenol A), diols having an aromatic ring having 8 to 20 carbon atoms (such as m- or p-xylylene glycol), oxyalkylene ethers of any bisphenol (such as bisphenol A, bisphenol S, or bisphenol F), oxyalkylene ethers of any polynuclear phenolic compound (such as dihydroxynaphthalene), and bis(2-hydroxyethyl) terephthalate]; and alkylene oxide added products (molecular weight: less than 500) of them; and any mixture of two or more thereof. Preferred examples of the low molecular weight diol are the aliphatic diols and the alicyclic-group-containing diols.

The ratio by weight of the polyester diol (A1) to the high molecular weight diol (A2) is preferably from 5/95 to 80/20, more preferably from 10/90 to 50/50, and most preferably from 20/80 to 40/60 from the viewpoints of the tensile strength and the elongation.

It appears that equivalently to urethane groups and urea groups, the (A1) acts as hard segments to express high physical properties while the concentrations of the urea groups and the urethane groups, which produce a large effect onto the meltability of the thermoplastic urethane resin, can be lowered, so that the resin is improved in meltability and further the meltability is made consistent with the physical properties. Such a combination of the polyester diol, which has a high solubility parameter to be high in cohesive force, with the high molecular weight diol, which has a low solubility parameter, makes it possible to make the meltability of the urethane resin of the present invention, which is a characteristic of the present invention, consistent with the tensile strength, elongation and abrasion resistance. This property is remarkably exhibited when the ratio by weight of the (A1) to the (A2), (A1)/(A2), is from 5/95 to 80/20.

The number-average molecular weight of the urethane resin (D) is from 10,000 to 40,000. The molecular weight is preferably from 12,000 to 35,000, and more preferably from 15,000 to 30,000 from the viewpoints of the low-temperature meltability and the high tensile strength.

The method for adjusting the molecular weight of the urethane resin (D) may be a method of partially blocking isocyanate groups of the isocyanate-group-terminated urethane prepolymer with a mono-functional alcohol. Examples of this monool include aliphatic monools having 1 to 8 carbon atoms [such as linear monools (such as methanol, ethanol, propanol, butanol, pentanol, hexanol, and octanol)], and monools having a branched chain (such as isopropyl alcohol, neopentyl alcohol, 3-methyl-pentanol, and 2-ethylhexanol)]; monools having a cyclic group having 6 to 10 carbon atoms [such as alicyclic-group-containing monools (such as cyclohexanol), and aromatic-group-containing monools (such as benzyl alcohol)] ; and any mixture of two or more thereof. Of these examples, preferred are aliphatic monools. Examples of the monool that is a high molecular weight monool include polyester monools, polyether monools, polyetherester monools; and any mixture of two or more thereof.

Examples of the process for producing the urethane resin (D) of the present invention are as follows:

(1) a process of causing high molecular weight diols (A) into which a mixture of a polyester diol (A1) and a high molecular weight diol (A2) is beforehand incorporated to react with a diisocyanate (B) to produce a polyurethane prepolymer (U) having at a terminal thereof an isocyanate group, and, in a subsequent step if necessary, mixing the prepolymer (U) with a low molecular weight diamine or low molecular weight diol (C) to extend the prepolymer, thereby preparing the urethane resin, and another process of stirring the polyurethane prepolymer (U) in water to cause water to react with the isocyanate group at the terminal of the polyurethane prepolymer (U), thereby preparing the urethane resin; and

(2) still another process of mixing (A) with (B) and optionally (C) at a time to cause the components to react with each other.

The reaction temperature when the urethane resin (D) is produced may be the same as adopted usually at the time of urethanization. When a solvent is used, the temperature is usually from 20 to 100°C. When no solvent is used, the temperature is usually from 20 to 140°C, and preferably from 80 to 130°C. In the above-mentioned prepolymerization reaction, use may be optionally made of a catalyst usually used for polyurethane to promote the reaction. Examples of the catalyst include amine catalysts [such as triethylamine, N-ethylmorpholine, and triethylenediamine], and tin-based catalysts [such as trimethyltin laurate, dibutyltin dilaurate, and dibutyltin maleate].

The melt viscosity of the urethane resin (D) at 190°C is preferably from 500 to 2000 Pa·s, and more preferably from 500 to 1000 Pa·s to make the low-temperature meltability of the urethane resin (D) good.

The storage modulus G' of the (D) at 130°C is preferably from $2.0 \times 10^6$ to $1.0 \times 10^8$ dyn/cm$^2$, and more preferably from $5.0 \times 10^6$ to $5.0 \times 10^7$ dyn/cm$^2$ from the viewpoint of the heat resistance thereof.

The storage modulus G' of the (D) at 180°C is preferably from $1.0 \times 10^3$ to $1.0 \times 10^5$ dyn/cm$^2$, and more preferably from $5.0 \times 10^3$ to $5.0 \times 10^4$ dyn/cm$^2$ from the viewpoint of the low-temperature meltability.

When the urethane resin (D) of the present invention is made into particles, the urethane resin (D) is applicable to a hot melt adhesive, powder for slush molding, or some other. The thermoplastic urethane resin particles (K) for thermal molding [hereinafter abbreviated to the urethane resin particles (K)] may be, for example, particles yielded by the following producing process:

(1) a process of melt-mixing a polyester diol (A1) and a high molecular weight diol (A2) with each other, causing these components to react with a diisocyanate (B) to set the ratio by mole of hydroxyl groups of these diols to isocyanate groups of the diisocyanate (B) into the range of 1:1.2 to 1:4.0 to yield a urethane prepolymer (U), and, if necessary, causing the urethane prepolymer (U) to undergo reaction for extension with a low molecular weight diamine or low molecular weight diol (C) in the presence of water and a dispersion stabilizer, thereby producing (E), in this process, the used low molecular weight diamine is allowable to be a blocked linear aliphatic diamine (C) (such as a ketimine compound), or some other;

(2) a process of causing the above-mentioned urethane prepolymer (U) to undergo reaction for extension with a low molecular weight diamine or low molecular weight diol (C) in the presence of an apolar organic solvent and a dispersion stabilizer, thereby producing (E); or

(3) a process of causing a diisocyanate (B), high molecular weight diols (A), and a low molecular weight diamine or low molecular weight diol (C) to react with each other to yield lumps of a thermoplastic polyurethane resin, and next making the lumps into powder (through, for example, a freeze-pulverizing method, or a method wherein in the state that the lumps are melted, the melted substance is passed through fine holes, and then the resultant is cut), thereby producing (E).

The volume-average particle diameter of the urethane resin particles (K) is preferably from 10 to 500 $\mu$m, and

more preferably from 70 to 300 μm.

By adding an additive (F) besides the urethane resin (D) to the urethane resin particles (K) of the present invention, the urethane resin particles (K) may be made into a urethane resin particle composition (P) for slush molding [hereinafter abbreviated to the urethane resin particle composition (P)]. Examples of the additive (F) include an inorganic filler, a pigment, a plasticizer, a releasing agent, an organic filler, a blocking inhibitor, a stabilizer, and a dispersing agent.

Examples of the inorganic filler include kaolin, talc, silica, titanium oxide, calcium carbonate, bentonite, mica, sericite, glass flakes, glass fiber, graphite, magnesium hydroxide, aluminum hydroxide, antimony trioxide, barium sulfate, zinc borate, alumina, magnesia, wollastonite, xonotlite, whisker, and metal powder. Of these examples, preferred are kaolin, talc, silica, titanium oxide, and calcium carbonate, and more preferred are kaolin and talc from the viewpoint of the promotion of the crystallization of the thermoplastic resin.

The volume-average particle diameter (μm) of the inorganic filler is preferably from 0.1 to 30, more preferably from 1 to 20, and in particular preferably from 5 to 10 from the viewpoint of the dispersibility thereof in the thermoplastic resin.

The addition amount (% by weight) of the inorganic filler is preferably from 0 to 40, and more preferably from 1 to 20 based on the weight of the (D).

Particles of the pigment are not particularly limited. A known organic pigment and/or inorganic pigment may be used therefor. The particles are blended in an amount usually from 10 parts or less by weight, and preferably from 0.01 to 5 parts by weight, per 100 parts by weight of the (D). Examples of the organic pigment include insoluble or soluble azo pigments, copper phthalocyanine based pigments, and quinacridone based pigments. Examples of the inorganic pigments include chromates, ferrocyan compounds, metal oxides (such as titanium oxide, iron oxide, zinc oxide, and aluminum oxide), metal salts [sulfates (such as barium sulfate), silicates (such as calcium silicate and magnesium silicate), carbonates (such as calcium carbonate and magnesium carbonate), and phosphates (such as calcium phosphate and magnesium phosphate)], metal powders (such as aluminum powder, iron powder, nickel powder, and copper powder), and carbon black. The average particle diameter of the pigment is not particularly limited, and is usually from 0.05 to 5.0 μm, and preferably from 0.02 to 1 μm.

The addition amount (% by weight) of the pigment particles is preferably from 0 to 5, and more preferably from 1 to 3 based on the weight of the (D).

Examples of the plasticizer include phthalic acid esters (dibutyl phthalate, dioctyl phthalate, dibutylbenzyl phthalate, and diisodecyl phthalate); aliphatic dibasic acid esters (such as di-2-ethylhexyl adipate and 2-ethylhexyl sebacate), trimellitic acid esters (such as tri-2-ethylhexyl trimellitate and trioctyl trimellitate) ; aliphatic acid esters (such as butyl oleate); aliphatic esters of phosphoric acid (such as trimethyl phosphate, triethyl phosphate, tributyl phosphate, tri-2-ethylhexyl phosphate, and tributoxy phosphate); aromatic esters of phosphoric acid (triphenyl phosphate, tricresyl phosphate, trixylenyl phosphate, cresyldiphenyl phosphate, xylenyldiphenyl phosphate, 2-ethylhexyldiphenyl phosphate, and tris (2,6-dimethylphenyl) phosphate) ; halogenated aliphatic phosphoric acid esters (such as tris(chloroethyl) phosphate, tris(β-chloropropyl) phosphate, tris(dichloropropyl) phosphate, and tris(tribromoneopentyl) phosphate) ; and any mixture of two or more thereof.

The addition amount (% by weight) of the plasticizer is preferably from 0 to 50, and more preferably from 5 to 20 based on the weight of the (D).

The releasing agent may be a known releasing agent. Examples thereof include fluorine compound releasing agents (such as triperfluoroalkyl (having 8 to 20 carbon atoms) esters of phosphoric acid, for example, triperfluorooctyl phosphate and triperfluorododecyl phosphate); silicone compound releasing agents (such as dimethylpolysiloxane, amino-modified dimethylpolysiloxane, and carboxyl-modified dimethylpolysiloxane); aliphatic acid ester releasing agents (such as monohydric or polyhydric alcohol esters of any aliphatic acid having 10 to 24 carbon atoms, for example, butyl stearate, hardened castor oil, and ethylene glycol monostearate) ; aliphatic acid amide releasing agents (such as mono or bisamides of any aliphatic acid (having 8 to 24 carbon atoms), for example, oleic amide, palmitic amide, stearic amide, and distearic amide of ethylenediamine; metal soaps (such as magnesium stearate and zinc stearate); natural or synthetic waxes (such as paraffin wax, microcrystalline wax, polyethylene wax, and polypropylene wax); and any mixture of two or more thereof.

The addition amount (% by weight) of the releasing agent is preferably from 0 to 1, and more preferably from 0.1 to 0.5 based on the weight of the (D).

The stabilizer may be a compound having, in the molecule thereof, a carbon-carbon double bond (such as an ethylene bond which may have a substituent) (provided that this double bond is not any double bond in the aromatic ring(s) thereof), or a carbon-carbon triple bond (such as an acetylene bond which may have a substituent), or some other compound. Examples thereof include esters each made from (meth)acrylic acid and a polyhydric alcohol (any polyhydric alcohol out of dihydric to decahydric alcohols; hereinafter, the same matter is applied to any description) (such as ethylene glycol di (meth) acrylate, trimethylolpropane tri(meth)acrylate, pentaerythritol tetra(meth)acrylate, and dipentaerythritol tr(meth)acrylate); esters each made from (meth)allyl alcohol and a polycarboxylic acid (any polycarboxylic acid out of dito hexa-carboxylic acids (such as diallyl phthalate and triallyl trimellitate)) ; (meth)allyl ethers of any polyhydric alcohol (such as pentaerythritol (meth) allyl ether); polyvinyl ethers of any polyhydric alcohol (such as ethylene glycol divinyl ether) ; polypropenyl ethers of any polyhydric alcohol (such as ethylene glycol dipropenyl ether) ; polyvinyl benzenes (such as divinyl benzene) ; and any mixture of two or more thereof. Of these examples, preferred are esters made from (meth) acrylic acid and a polyhydric alcohol, and more preferred are trimethylolpropane tri(meth)acrylate, pentaerythritol tetra(meth)acrylate, and dipentaerythritol penta(meth)acrylate from the viewpoint of stabilizing performance (radical polymerization rate).

The addition amount (% by weight) of the stabilizer is preferably from 0 to 20, and more preferably from 1 to 15 based on the weight of (D).

A known inorganic blocking inhibitor or organic blocking inhibitor, or some other may be incorporated, as a powder fluidity improver or a blocking inhibitor, into the urethane resin particle composition (P) of the present invention.

Examples of the inorganic blocking inhibitor include silica, talc, titanium oxide, and calcium carbonate.

Examples of the organic blocking inhibitor include thermosetting resins (such as thermosetting polyurethane resin, guanamine resin, and epoxy resin) having a particle diameter of 10 $\mu$m or less; and thermoplastic resins (such as thermoplastic polyurethane urea resin, and poly (meth) acrylate resin) having a particle diameter of 10 $\mu$m or less.

The addition amount (% by weight) of the blocking inhibitor (fluidity improver) is preferably from 0 to 5, and more preferably from 0.5 to 1 based on the weight of the (D).

A mixing machine used when the urethane resin particle composition (P) is mixed with the above-mentioned additive (s) and others to produce a mixture may be a known powder mixing machine, and may be any one of a container-rotating type mixer, a container-fixed type mixer, and a fluid-moving type mixer. Well-known is a method of dry-blending these components, using the following as, for example, the container-fixed type mixer: a high-speed flowing-type mixer, a biaxial paddle type mixer, a high-speed shearing mixer (such as a Henschel Mixer (registered trademark)), a low-speed mixer (such as a planetary mixer), or a cone-shaped screw mixer (such as a Nauta Mixer (registered trademark). It is preferred to use, among them, a biaxial paddle type mixer, a low-speed mixer (such as a planetary mixer), a cone-shaped screw mixer (such as a Nauta Mixer (registered trademark; this note is omitted hereinafter), or the like.

The volume-average particle diameter of the urethane resin particle composition (P) is preferably from 10 to 500 $\mu$m, and more preferably from 70 to 300 $\mu$m.

Examples of the method for molding the thermoplastic urethane resin particles (K) of the present invention for thermal molding include injection molding, extrusion molding, blow molding, vacuum molding, and slush molding. A preferred molding method out of these molding methods is slush molding since the particles can be freely and faithfully shaped into a designed form.

The urethane resin particle composition (P) of the present invention may be molded by, for example, a slush molding method, so as to produce a urethane resin molded body, such as a skin body. The slush molding method may be a method of vibrating/rotating a box in which the particle composition is put, and a heated mold together, so as to melt and fluidize the powder inside the mold, cooling the fluidized material, and then solidifying the cooled material to produce a skin body.

The temperature of the mold is preferably from 200 to 330°C, and more preferably from 210 to 280°C.

The thickness of the skin body molded from the urethane resin particle composition (P) of the present invention is preferably from 0.3 to 1.5 mm. The composition (P) can be molded in the range of relatively low temperatures. The temperature for the molding may be from 200 to 250°C.

The molded skin body can be rendered a resin molded product by setting the body to a foaming mold to bring the front surface of the body into contact with the mold, and then causing a urethane foam to flow thereinto, thereby forming a foamed layer having a thickness of 5 to 15 mm onto the rear surface.

The resin molded product molded from the urethane resin particle composition (P) of the present invention is suitable for interior matters of an automobile, such as an instrument panel and a door trim.

The melt viscosity of the urethane resin particle composition (P) of the present invention at 190°C is preferably from 100 to 500 Pa·s, more preferably from 100 to 300 Pa·s to make the composition good in low-temperature meltability.

The storage modulus G' of the urethane resin particle composition (P) of the present invention at 130°C is preferably from $1.0 \times 10^6$ to $5.0 \times 10^7$ dyn/cm$^2$, and more preferably from $5.0 \times 10^6$ to $5.0 \times 10^7$ dyn/cm$^2$ from the viewpoint of the heat resistance thereof.

The storage modulus G' of the urethane resin particle composition (P) of the present invention at 180°C is preferably from $1.0 \times 10^3$ to $1.0 \times 10^5$ dyn/cm$^2$, and more preferably from $5.0 \times 10^3$ to $5.0 \times 10^4$ dyn/cm$^2$ from the viewpoint of the low-temperature meltability.

EXAMPLES

Hereinafter, the present invention will be described in more detail by way of examples. However, the present invention is not limited thereto. In the following description, "part(s)" and "%" represent "part(s) by weight" and "% by weight", respectively.

Production Example 1

Production of MEK ketiminated compound of diamine

While hexamethylenediamine and an excessive amount of MEK (methyl ethyl ketone; the molar quantity thereof was 4 times that of the diamine) were refluxed at 80°C for 24 hours, water generated therefrom was removed into the outside of the system. Thereafter, an unreacted portion of MEK was removed under reduced pressure to yield an MEK ketiminated compound.

Production Example 2

Production of polyethylene phthalate (terephthalic acid/isophthalic acid = 50/50) (A1-1)

Into a reaction vessel equipped with a cooling tube, a stirrer, and a nitrogen-introducing tube were charged 393 parts of terephthalic acid, 393 parts of isophthalic acid, and 606 parts of ethylene glycol. While water generated therefrom was distilled off in a gas flow of nitrogen at 210°C, the reactive components were caused to react with each other for 5 hours. Thereafter, the reaction was continued under a reduced pressure of 5 to 20 mmHg, and at a predetermined softening point a polyethylene phthalate diol (A1-1) was taken out. The amount of a recovered portion of ethylene glycol was 245 parts. The hydroxyl value of the resultant polyethylene phthalate diol was measured, and the number-average molecular weight (hereinafter abbreviated to the Mn) was calculated. As a result, the Mn was 900. The glass transition temperature thereof was 20°C.

Through the same producing process except that the period for reducing the pressure was adjusted, a polyethylene phthalate diol (A1-2) having an Mn of 2500 was yielded. The amount of a recovered portion of ethylene glycol was 270 parts. The glass transition temperature thereof was 50°C.

Through the same producing process except that the period for reducing the pressure was adjusted, a polyethylene phthalate diol (A1-3) having an Mn of 5000 was yielded. The amount of a recovered portion of ethylene glycol was 305 parts. The glass transition temperature thereof was 65°C.

Production Example 3

Production of polyethylene phthalate (terephthalic acid/orthophthalic acid = 50/50) (A1-4)

Into a reaction vessel equipped with a cooling tube, a stirrer, and a nitrogen-introducing tube were charged 393 parts of terephthalic acid, 393 parts of orthophthalic acid, and 606 parts of ethylene glycol. While water generated therefrom was distilled off in a gas flow of nitrogen at 210°C, the reactive components were caused to react with each other for 5 hours. Thereafter, the reaction was continued under a reduced pressure of 5 to 20 mmHg, and at a predetermined softening point a polyethylene phthalate diol (A1-4) was taken out. The amount of a recovered portion of ethylene glycol was 270 parts. The hydroxyl value of the resultant polyethylene phthalate diol was measured, and the Mn was calculated. As a result, the Mn was 2500. The glass transition temperature thereof was 35°C.

Production Example 4

Production of polyethylene phthalate (terephthalic acid alone) (A1-5)

Into a reaction vessel equipped with a cooling tube, a stirrer, and a nitrogen-introducing tube were charged 786 parts of terephthalic acid and 606 parts of ethylene glycol. While water generated therefrom was distilled off in a gas flow of nitrogen at 210°C, the reactive components were caused to react with each other for 5 hours. Thereafter, the reaction was continued under a reduced pressure of 5 to 20 mmHg, and at a predetermined softening point a polyethylene phthalate diol (A1-5) was taken out. The amount of a recovered portion of ethylene glycol was 245 parts. The hydroxyl value of the resultant polyethylene phthalate diol was measured, and the Mn was calculated. As a result, the Mn was 900. The glass transition temperature thereof was 25°C.

Through the same producing process except that the 786 parts of terephthalic acid was changed to 786 parts of isophthalic acid, a polyethylene phthalate diol (A1-6) having an Mn of 900 was yielded. The glass transition temperature thereof was 15°C.

Through the same producing process except that the 786 parts of terephthalic acid was changed to 786 parts of orthophthalic acid, a polyethylene phthalate diol (A1-7) having an Mn of 900 was yielded. The glass transition temperature thereof was 5°C.

Production Example 5

Production of a polytetramethylene phthalate (terephthalic acid/isophthalic acid = 50/50) (A1-8)

Into a reaction vessel equipped with a cooling tube, a stirrer, and a nitrogen-introducing tube were charged 393 parts of terephthalic acid, 393 parts of isophthalic acid, and 450 parts of tetramethylene glycol. While water generated therefrom was distilled off in a gas flow of nitrogen at 210°C, the reactive components were caused to react with each other for 5 hours. Thereafter, the reaction was continued under a reduced pressure of 5 to 20 mmHg, and a polytetramethylene phthalate diol (A1-8) was taken out. The hydroxyl value of the resultant polyethylene phthalate diol was measured, and the Mn was calculated. As a result, the Mn was 900. The glass transition temperature thereof was 10°C.

Production Example 6

Production of a polycondensate (A3-1) of ethylene glycol, butylene glycol, phthalic acid (terephthalic acid/isophthalic acid = 50/50), and adipic acid

Into a reaction vessel equipped with a cooling tube, a stirrer, and a nitrogen-introducing tube were charged 181 parts of terephthalic acid, 181 parts of isophthalic acid, 338 parts of adipic acid, 166 parts of ethylene glycol, and 256 parts of butylene glycol. While water generated therefrom was distilled off in a gas flow of nitrogen at 210°C, the reactive components were caused to react with each other for 5 hours. Thereafter, the reaction was continued under a reduced pressure of 5 to 20 mmHg; and taken out was a polycondensate (A3-1) of ethylene glycol, butylene glycol, phthalic acid (terephthalic acid/isophthalic acid = 50/50), and adipic acid. The hydroxyl value of the resultant (A3-1) was measured, and the Mn was calculated. As a result, the Mn was 950. About the (A3-1), the ratio of (A1-1) to (A2-1) corresponded to 1 in light of the charged amounts thereof.

Production Example 7

Production of a transesterified product (A3-2) of the polyethylene phthalate (terephthalic acid/isophthalic acid = 50/50) (A1-1) and a polybutylene adipate (A2-1)

Into a sealed reaction vessel equipped with a stirrer were charged 333 parts of the polyethylene phthalate (terephthalic acid/isophthalic acid = 50/50) (A1-1), the Mn of which was 900, and 671 parts of a polybutylene adipate (A2-1), the Mn of which was 1000. The reactive components were caused to react with each other at 180°C for 5 hours; and taken out was a transesterified product (A3-2) of the polyethylene phthalate (terephthalic acid/isophthalic acid = 50/50) (A1-1), the Mn of which was 900 and the polybutylene adipate (A2-1), the Mn of which was 1000. The Mn of the (A3-2) was 965. The hydroxyl value of the resultant (A3-2) was measured, and the Mn was calculated. As a result, the Mn was 965. About the (A3-2), the ratio of (A1-1) to (A2-1) corresponded to 0.5 in light of the charged amounts thereof.

Production Example 8

Production of transesterified product (A3-3) of polyethylene phthalate (terephthalic acid/isophthalic acid = 50/50) (A1-1) and the polybutylene adipate (A2-1)

Into a sealed reaction vessel equipped with a stirrer were charged 833 parts of the polyethylene phthalate (terephthalic acid/isophthalic acid = 50/50) (A1-1), the Mn of which was 900, and 167 parts of the polybutylene adipate (A2-1), the Mn of which was 1000. The reactive components were caused to react with each other at 180°C for 5 hours; and taken out was a transesterified product (A3-3) of the polyethylene phthalate (terephthalic acid/isophthalic acid = 50/50) (A1-1), the Mn of which was 900 and the polybutylene adipate (A2-1), the Mn of which was 1000. The Mn of the (A3-3) was 915. The hydroxyl value of the resultant (A3-3) was measured, and the Mn was calculated. As a result, the Mn was 965. About the (A3-3), the ratio of (A1-1)/(A2-1) corresponded to 5 in light of the charged amounts thereof.

Production Example 9

Production of prepolymer solution (U-1)

Into a reaction vessel equipped with a thermostat, a stirrer, and a nitrogen-blowing tube were charged the polyester diol (A1-1) (304 parts), the polybutylene adipate [high molecular weight diol (A2-1)](glass transition temperature: -60°C) (1214 parts), the Mn of which was 1000, and 1-octanol (27.6 parts). The inside of the vessel was purged with nitrogen. Thereafter, while stirred, the mixture was heated to 110°C to be melted. The melted mixture was cooled to 60°C. Subsequently, thereinto was charged hexamethylene diisocyanate (313.2 parts), and the reactive components were caused to react with each other at 85°C for 6 hours. Next, the resultant system was cooled to 60°C, and then thereto were added tetrahydrofuran (317 parts), a stabilizer [Irganox 1010, manufactured by Ciba Specialty Chemicals Ltd.] (2.7 parts), and carbon black (1 part). The components in the vessel were mixed with each other into an even state to yield a prepolymer solution (U-1). The NCO content in the resultant prepolymer solution was 0.8%.

Production Example 10

Production of prepolymer solution (U-2)

A prepolymer solution (U-2) was yielded in the same way as in Production Example 9 except that the charged raw materials were changed as described below. The NCO content by percentage in the resultant prepolymer solution was 1.2%.

Polyester diol (A1-2) (759 parts)
Polybutylene adipate [high molecular weight diol (A2-1)] (glass transition temperature: -60°C) (759 parts), the Mn of which was 1000
1-Octanol (26.4 parts)
Hexamethylene diisocyanate (245.8 parts)
Tetrahydrofuran (317 parts)
Stabilizer [Irganox 1010] (2.7 parts)
Carbon black (1 part)

Production Example 11

Production of prepolymer solution (U-3)

A prepolymer solution (U-3) was yielded in the same way as in Production Example 9 except that the charged raw materials were changed as described below. The NCO content in the resultant prepolymer solution was 1.1%.

Polyester diol (A1-2) (75.9 parts)
High molecular weight diol (A2-1) (1442 parts)
1-Octanol (26.4 parts)
Hexamethylene diisocyanate (245.8 parts)
Tetrahydrofuran (317 parts)
Stabilizer [Irganox 1010] (2.7 parts)
Carbon black (1 part)

Production Example 12

Production of prepolymer solution (U-4)

A prepolymer solution (U-4) was yielded in the same way as in Production Example 9 except that the charged materials were changed as described below. The NCO content by percentage in the resultant prepolymer solution was 2.9%.

Polyester diol (A1-2) (1214 parts)
Polyethylene adipate [high molecular weight diol (A2-2)] (glass transition temperature: -45°C) (304 parts), the Mn of which was 1200
1-Octanol (26.4 parts)
Hexamethylene diisocyanate (264.7 parts)
Tetrahydrofuran (317 parts)
Stabilizer [Irganox 1010] (2.7 parts)
Carbon black (1 part)

Production Example 13

Production of prepolymer solution (U-5)

A prepolymer solution (U-5) was yielded in the same way as in Production Example 9 except that the charged raw materials were changed as described below. The NCO content in the resultant prepolymer solution was 2.3%.

Polyester diol (A1-2) (1214 parts)
Polytetramethylene glycol [high molecular weight diol (A2-3)] (glass transition temperature: -55°C) (304 parts), the Mn of which was 1000
1-Octanol (26.4 parts)
Hexamethylene diisocyanate (245.8 parts)
Tetrahydrofuran (317 parts)
Stabilizer [Irganox 1010] (2.7 parts)
Carbon black (1 part)

Production Example 14

Production of prepolymer solution (U-6)

A prepolymer solution (U-6) was yielded in the same way as in Production Example 9 except that the charged materials were changed as described below. The NCO content in the resultant prepolymer solution was 1.82%.

Polyester diol (A1-4) (304 parts)
High molecular weight diol (A2-1) (1216 parts)
1-Octanol (20.5 parts)
Hexamethylene diisocyanate (320.7 parts)
Tetrahydrofuran (266 parts)
Stabilizer [Irganox 1010] (3.0 parts)
Carbon black (1 part)

Production Example 15

Production of prepolymer solution (U-7)

A prepolymer solution (U-7) was yielded in the same way as in Production Example 9 except that the charged raw materials were changed as described below. The NCO content in the resultant prepolymer solution was 1.82%.

Polyester diol (A1-5) (380 parts)
High molecular weight diol (A2-1) (1139 parts)
1-Octanol (26.4 parts)
Hexamethylene diisocyanate (362 parts)
Tetrahydrofuran (273 parts)
Stabilizer [Irganox 1010] (3.0 parts)
Carbon black (1 part)

Production Example 16

Production of prepolymer solution (U-8)

A prepolymer solution (U-8) was yielded in the same way as in Production Example 9 except that the charged raw materials were changed as described below. The NCO content in the resultant prepolymer solution was 1.82%.

Polyester diol (A1-6) (380 parts)
High molecular weight diol (A2-1) (1139 parts)
1-Octanol (26.4 parts)
Hexamethylene diisocyanate (362 parts)
Tetrahydrofuran (273 parts)

Stabilizer [Irganox 1010] (3.0 parts)
Carbon black (1 part)

Production Example 17

Production of prepolymer solution (U-9)

A prepolymer solution (U-9) was yielded in the same way as in Production Example 9 except that the charged raw materials were changed as described below. The NCO content in the resultant prepolymer solution was 1.82%.

Polyester diol (A1-7) (380 parts)
High molecular weight diol (A2-1) (1139 parts)
1-Octanol (26.4 parts)
Hexamethylene diisocyanate (362 parts)
Tetrahydrofuran (273 parts)
Stabilizer [Irganox 1010] (3.0 parts)
Carbon black (1 part)

Production Example 18

Production of prepolymer solution (U-10)

A prepolymer solution (U-10) was yielded in the same way as in Production Example 9 except that the charged raw materials were changed as described below. The NCO content in the resultant prepolymer solution was 1.2%.

Polyester diol (A1-3) (759 parts)
High molecular weight diol (A2-3) (759 parts)
1-Octanol (26.4 parts)
Hexamethylene diisocyanate (245.8 parts)
Tetrahydrofuran (317 parts)
Stabilizer [Irganox 1010] (2.7 parts)
Carbon black (1 part)

Production Example 19

Production of prepolymer solution (U-11)

A prepolymer solution (U-11) was yielded in the same way as in Production Example 9 except that the charged raw materials were changed as described below. The NCO content in the resultant prepolymer solution was 0.8%.

Polyester diol (A1-8) (304 parts)
High molecular weight diol (A2-3) (1214 parts)
1-Octanol (27.6 parts)
Hexamethylene diisocyanate (313.2 parts)
Tetrahydrofuran (317 parts)
Stabilizer [Irganox 1010] (2.7 parts)
Carbon black (1 part)

Production Example 20

Production of prepolymer solution (U-12)

Into a reaction vessel equipped with a thermostat, a stirrer, and a nitrogen-blowing tube were charged the polyester diol (A1-1) (298 parts), and the polycondensate (A3-1) (30 parts) of ethylene glycol, butylene glycol, phthalic acid (terephthalic acid/isophthalic acid = 50/50) and adipic acid. The mixture was heated to 100°C, and then thereto were charged the polybutylene adipate [high molecular weight diol (A2-1)] (glass transition temperature: -60°C) (1216 parts), the Mn of which was 1000, and 1-octanol (27.6 parts). The inside of the vessel was purged with nitrogen. Thereafter, while stirred, the mixture was heated to 110°C to be melted. The melted mixture was cooled to 60°C. Subsequently, thereinto was charged hexamethylene diisocyanate (313.6 parts), and the reactive components were caused to react with each other at 85°C for 6 hours. Next, the resultant system was cooled to 60°C, and then thereto were added tetrahydrofuran (317 parts), a stabilizer (2.7 parts) [Irganox 1010, manufactured by Ciba Specialty Chemicals Ltd.], and carbon black (1 part). The components in the vessel were mixed with each other into an even state to yield a prepolymer solution (U-12) . The NCO content in the resultant prepolymer solution was 0.8%.

Production Example 21

Production of prepolymer solution (U-13)

Into a reaction vessel equipped with a thermostat, a stirrer, and a nitrogen-blowing tube were charged the polyester diol (A1-1) (292 parts), and the transesterified product (A3-2) (319 parts) of the polyethylene phthalate (terephthalic acid/isophthalic acid = 50/50) (A1-1) and the polybutylene adipate (A2-1). The mixture was heated to 100°C, and then thereto were charged the polybutylene adipate [high molecular weight diol (A2-1)] (glass transition temperature: -60°C) (895 parts), the $M_n$ of which was 1000, and 1-octanol (27.6 parts). The inside of the vessel was purged with nitrogen. Thereafter, while stirred, the mixture was heated to 110°C to be melted. The melted mixture was cooled to 60°C. Subsequently, thereinto was charged hexamethylene diisocyanate (313.2 parts), and the reactive components were caused to react with each other at 85°C for 6 hours. Next, the resultant system was cooled to 60°C, and then thereto were added tetrahydrofuran (317 parts), a stabilizer (2.7 parts) [Irganox 1010, manufactured by Ciba Specialty Chemicals Ltd.], and carbon black (1 part). The components in the vessel were mixed with each other into an even state to yield a prepolymer solution (U-13). The NCO content in the resultant prepolymer solution was 0.8%.

Production Example 22

Production of prepolymer solution (U-14)

Into a reaction vessel equipped with a thermostat, a stirrer, and a nitrogen-blowing tube were charged the polyester diol (A1-1) (292 parts), and the transesterified product (A3-3) (319 parts) of the polyethylene phthalate (terephthalic acid/isophthalic acid = 50/50) (A1-1) and the polybutylene adipate (A2-1). The mixture was heated to 100°C, and then thereto were charged the polybutylene adipate [high molecular weight diol (A2-1)] (glass transition temperature: -60°C) (895 parts), the $M_n$ of which was 1000, and 1-octanol (27.6 parts) . The inside of the vessel was purged with nitrogen. Thereafter, while stirred, the mixture was heated to 110°C to be melted. The melted mixture was cooled to 60°C. Subsequently, thereinto was charged hexamethylene diisocyanate (313.8 parts), and the reactive components were caused to react with each other at 85°C for 6 hours. Next, the resultant system was cooled to 60°C, and then thereto were added tetrahydrofuran (317 parts), a stabilizer (2.7 parts) [Irganox 1010, manufactured by Ciba Specialty Chemicals Ltd.], and carbon black (1 part). The components in the vessel were mixed with each other into an even state to yield a prepolymer solution (U-14). The NCO content in the resultant prepolymer solution was 0.8%.

Production Example 23

Production of prepolymer solution (U-15)

Into a reaction vessel equipped with a thermostat, a stirrer, and a nitrogen-blowing tube were charged the polyester diol (A1-1) (253 parts), and the polycondensate (A3-1) (253 parts) of the ethylene glycol, butylene glycol, phthalic acid (terephthalic acid/isophthalic acid = 50/50), and adipic acid. The mixture was heated to 100°C, and then thereto were charged the polybutylene adipate [high molecular weight diol (A2-1)] (glass transition temperature: -60°C) (1013 parts), the $M_n$ of which was 1000, and 1-octanol (27.6 parts). The inside of the vessel was purged with nitrogen. Thereafter, while stirred, the mixture was heated to 110°C to be melted. The melted mixture was cooled to 60°C. Subsequently, thereinto was charged hexamethylene diisocyanate (312.2 parts), and the reactive components were caused to react with each other at 85°C for 6 hours. Next, the resultant system was cooled to 60°C, and then thereto were added tetrahydrofuran (317 parts), a stabilizer (2.7 parts) [Irganox 1010, manufactured by Ciba Specialty Chemicals Ltd.], and carbon black (1 part). The components in the vessel were mixed with each other into an even state to yield a prepolymer solution (U-15). The NCO content in the resultant prepolymer solution was 0.8%.

Example 1

Production of thermoplastic urethane resin particles (K-1)

Into a reaction vessel were charged the prepolymer solution (U-1) (100 parts) yielded in Production Example 9 and the MEK ketiminated compound (2.1 parts), and the components were mixed with each other. Thereto were added 300 parts of an aqueous solution wherein a polycarboxylic acid type anionic surfactant (Sansparl PS-8 (30 parts), manufactured by Sanyo Chemical Industries, Ltd.) was dissolved. An ultra disperser manufactured by Yamato Scientific Co., Ltd. was used to mix these components with each other at a rotation number of 6000 rpm for 1 minute. This mixture was shifted to a reaction vessel equipped with a thermostat, a stirrer and a nitrogen-blowing tube, and then the inside thereof was purged with nitrogen. Thereafter, while the mixture was stirred, the reactive components therein were caused to react with each other at 50°C for 10 hours. After the end of the reaction, the resultant solid component was separated by filtration, and then dried to produce urethane resin particles (K-1). The Mn of the (K-1) was 18,000, and the volume-average particle diameter was 143 $\mu$m. The melt viscosity of the (K-1) was 510 Pa·s at 190°C, and the storage modulus was 4.5 x $10^6$ dyn/cm$^2$ at 130°C and was 3.0 x $10^4$ dyn/cm$^2$ at 180°C.

Into a 100 L-Nauta mixer were charged the thermoplastic urethane resin particles (K-1) (100 parts), a radical-polymerizable-unsaturated-group-containing compound, dipentaerythritol pentaacrylate [DA600, manufactured by Sanyo Chemical Industries, Ltd.] (4.0 parts), and bis (1,2,2,6,6-pentamethyl-4-piperidyl) sebacate and 1,2,2,6,6-pentamethyl-4-piperidyl sebacate (mixture) [trade name: TINUVIN 765, manufactured by Ciba Specialty Chemicals Inc.] (0.3 parts) as ultraviolet stabilizers to immerse the particles in the liquid at 70°C for 4 hours. After the immersion for the 4 hours, thereinto were charged two internally-additive releasing agents, i.e., a dimethylpolysiloxane [KL45-1000, manufactured by Nippon Unicar Co., Ltd.] (0.06 parts), and a carboxyl-modified silicone [X-22-3710, manufactured by Shin-Etsu Chemical Co., Ltd.] (0.05 parts), and then these components were mixed with each other for 1 hour. Thereafter, the mixture was cooled to room temperature. Finally, thereto was charged a blocking inhibitor, a crosslinked polymethylmethacrylate [Ganz Pearl PM-030S, manufactured by Ganz Chemical Co., Ltd.] (0.5 parts), and the components were mixed with each other to yield a thermoplastic urethane resin particle composition (P-1) . The volume-average particle diameter of the (P-1) was 144 $\mu$m. The melt viscosity of the (P-1) was 100 Pa·s at 190°C, and the storage modulus was 3.6 x $10^6$ dyn/cm$^2$ at 130°C, and was 8.0 x $10^3$ dyn/cm$^2$ at 180°C.

Example 2

Urethane resin particles (K-2) were produced in the same way as in Example 1 except that instead of the prepolymer solution (U-1) in Example 1, the prepolymer solution (U-2) (100 parts) was used, and the amount of the MEK ketiminated compound was changed to 3.2 parts. The Mn of the (K-2) was 18,000, and the volume-average particle diameter was 152 $\mu$m. The melt viscosity of the (K-2) was 850 Pa·s at 190°C, and the storage modulus was 1.0 x $10^7$ dyn/cm$^2$ at 130°C, and was 4.5 x $10^4$ dyn/cm$^2$ at 180°C.

Furthermore, a urethane resin particle composition (P-2) was yielded in the same way as in Example 1 except that instead of the urethane resin particles (K-1), the urethane resin particles (K-2) were used. The volume-average particle diameter of the (P-2) was 153 $\mu$m. The melt viscosity of the (P-2) was 140 Pa·s at 190°C, and the storage modulus was 8.0 x $10^6$ dyn/cm$^2$ at 130°C, and was 1.5 x $10^4$ dyn/cm$^2$ at 180°C.

Examples 3 to 11

Urethane resin particles (K-3) to (K-11) were produced in the same way as in Example 1 except that instead of the prepolymer solution (U-1) in Example 1, the prepolymer solutions (U-3) to (U-11) (100 parts) were used, respectively, and the amount of the MEK ketiminated compound was changed, respectively, as described below.

The respective Mn's and the respective volume-average particle diameters of the (K-3) to (K-11) are described below. The respective melt viscosities of the (K-3) to (K-11) at 190°C, and the respective storage moduli at 130°C and those at 180°C are described in Table 1.

Furthermore, urethane resin particle compositions (P-3) to (P-11) were yielded in the same way as in Example 1 except that instead of the urethane resin particles (K-1), the urethane resin particles (K-3) to (K-11) were used, respectively. The respective volume-average particle diameters of the (P-3) to (P-11) are described below. The respective melt viscosities of the (P-3) to (P-11) at 190°C, and the respective storage moduli at 130°C and those at 180°C are described in Table 1.

Example 3

MEK ketiminated compound amount: 3.0 parts
Mn of the (K-3): 18,000, and volume-average particle diameter: 144 μm
Volume-average particle diameter of the (P-3): 145 urn

Example 4

MEK ketiminated compound amount: 7.7 parts
Mn of the (K-4): 18,000, and volume-average particle diameter: 144 μm
Volume-average particle diameter of the (P-4): 145 μm

Example 5

MEK ketiminated compound amount: 6.1 parts
Mn of the (K-5): 18,000, and volume-average particle diameter: 144 μm
Volume-average particle diameter of the (P-5): 145 μm

Example 6

MEK ketiminated compound amount: 4.7 parts
Mn of the (K-6): 20,000, and volume-average particle diameter: 147 μm
Volume-average particle diameter of the (P-6): 148 μm

Example 7

MEK ketiminated compound amount: 4.7 parts
Mn of the (K-7): 20,000, and volume-average particle diameter: 150 μm
Volume-average particle diameter of the (P-7): 151 μm

Example 8

MEK ketiminated compound amount: 4.7 parts
Mn of the (K-8): 20,000, and volume-average particle diameter: 145 μm
Volume-average particle diameter of the (P-8): 148 μm

Example 9

MEK ketiminated compound amount: 4.7 parts
Mn of the (K-9): 20,000, and volume-average particle diameter: 143 μm
Volume-average particle diameter of the (P-9): 144 μm

Example 10

MEK ketiminated compound amount: 3.2 parts
Mn of the (K-10): 20,000, and volume-average particle diameter: 146 μm

Volume-average particle diameter of the (P-10): 148 μm

Example 11

MEK ketiminated compound amount: 2.1 parts
Mn of the (K-11): 20,000, and volume-average particle diameter: 145 μm
Volume-average particle diameter of the (P-11): 148 μm

Example 12

Urethane resin particles (K-12) were produced in the same way as in Example 2 except that the MEK ketiminated compound in Example 2 was changed to the polyester diol (A1-1) (13 parts) . The Mn of the (K-12) was 18,000, and the volume-average particle diameter was 155 μm. The melt viscosity of the (K-12) at 190°C, and the storage modulus at 130°C and that at 180°C are described in Table 2.
Furthermore, a urethane resin particle composition (P-12) was yielded in the same way as in Example 1 except that instead of the urethane resin particles (K-1), the urethane resin particles (K-12) were used. The volume-average particle diameter of the (P-12) was 157 μm. The melt viscosity of the (P-12) at 190°C, and the storage modulus at 130°C and that at 180°C are described in Table 2.

Example 13

Urethane resin particles (K-13) were produced in the same way as in Example 2 except that the MEK ketiminated compound in Example 2 was changed to 1,4-butanediol (1.3 parts). The Mn of the (K-10) was 18,000, and the volume-average particle diameter was 144 μm. The melt viscosity of the (K-13) at 190°C, and the storage modulus at 130°C and that at 180°C are described in Table 2.
Furthermore, a thermoplastic urethane resin particle composition (P-13) was yielded in the same way as in Example 1 except that instead of the urethane resin particles (K-1), the urethane resin particles (K-13) were used. The volume-average particle diameter of the (P-13) was 145 μm. The melt viscosity of the (P-13) at 190°C, and the storage modulus at 130°C and that at 180°C are described in Table 2.

Examples 14 to 17

Urethane resin particles (K-14) to (K-17) were produced in the same way as in Example 1 except that instead of the prepolymer solution (U-1) in Example 1, the prepolymer solutions (U-12) to (U-15) (100 parts) were used, respectively.
The respective Mn's and the respective volume-average particle diameters of the (K-14) to (K-17) are described below. The respective melt viscosities of the (K-14) to (K-17) at 190°C, and the respective storage moduli at 130°C and those at 180°C are described in Table 2.
Furthermore, urethane resin particle compositions (P-14) to (P-17) were yielded in the same way as in Example 1 except that instead of the urethane resin particles (K-1), the urethane resin particles (K-14) to (K-17) were used, respectively. The respective volume-average particle diameters of the (P-14) to (P-17) are described below. The respective melt viscosities of the (P-14) to (P-17) at 190°C, and the respective storage moduli at 130°C and those at 180°C are described in Table 2.

Example 14

Mn of the (K-14): 20,000, and volume-average particle diameter: 152 μm
Volume-average particle diameter of the (P-14): 144 μm

Example 15

Mn of the (K-15): 20,000, and volume-average particle diameter: 145 μm

Volume-average particle diameter of the (P-15): 146 μm

Example 16

Mn of the (K-16): 20,000, and volume-average particle diameter: 147 μm
Volume-average particle diameter of the (P-16): 148 μm

Example 17

Mn of the (K-17): 20,000, and volume-average particle diameter: 152 μm
Volume-average particle diameter of the (P-17): 152 μm

Comparative Example 1

A prepolymer solution (U-1') was yielded in the same way as in Production Example 11 except that instead of the polybutylene adipate (A2-1) (1442 parts), the Mn of which was 1000, in the production of the prepolymer solution in Production Example 11, the following was used: a polyethylene adipate having an Mn of 1000 [high molecular weight diol (A2-4) ] (glass transition temperature: -50°C) (1442 parts). Urethane resin particles (K-11) were then produced in the same way as in Example 1 except that the prepolymer solution (U-1') (100 parts) was used, and the amount of the MEK ketiminated compound was changed to 3.0 parts. The Mn of the (K-1') was 18,000, and the volume-average particle diameter was 141 μm. The melt viscosity of the (K-1') at 190°C, and the storage modulus at 130°C and that at 180°C are described in Table 2.
Furthermore, a urethane resin particle composition (P-1') was yielded in the same way as in Example 1. The volume-average particle diameter of the (P-1') was 142 μm. The melt viscosity of the (P-1') at 190°C, and the storage modulus at 130°C and that at 180°C are described in Table 2.

Comparative Example 2

A prepolymer solution (U-2') was yielded in the same way as in Production Example 12 except that instead of the polybutylene adipate (A2-2) (304 parts), the Mn of which was 1200, in the production of the prepolymer solution in Production Example 12, the following was used: a polyhexamethylene adipate having an Mn of 1000 [high molecular weight diol (A2-5)] (glass transition temperature: -65°C) (304 parts). Urethane resin particles (K-2') were then produced in the same way as in Example 1 and Production Example 12 except that the prepolymer solution (U-2') (100 parts) was used, and the amount of the MEK ketiminated compound was changed to 7.7 parts. The Mn of the (K- 2') was 18, 000, and the volume-average particle diameter was 144 μm. The melt viscosity of the (K-2') at 190°C, and the storage modulus at 130°C and that at 180°C are described in Table 2.
Furthermore, a thermoplastic urethane resin particle composition (P-2') was yielded in the same way as in Example 1. The volume-average particle diameter of the (P-2') was 145 μm. The melt viscosity of the (P-2') at 190°C, and the storage modulus at 130°C and that at 180°C are described in Table 2.

Comparative Example 3

A prepolymer solution (U-3') was yielded in the same way as in Production Example 10 except that instead of the polyester diol (A1-2) in Production Example 10, the following was used: a polyhexamethylene isophthalate diol having an Mn of 2500 (A1-9) (glass transition temperature: -5°C). Urethane resin particles (K-3') were then produced in the same way as in Example 1 except that the prepolymer solution (U-3') (100 parts) was used, and the amount of the MEK ketiminated compound was changed to 3.2 parts. The Mn of the (K-3') was 20,000, and the volume-average particle diameter was 147 μm. The melt viscosity of the (K-3') at 190°C, and the storage modulus at 130°C and that at 180°C are described in Table 2.
Furthermore, a thermoplastic urethane resin particle composition (P-3') was yielded in the same way as in Example 1. The volume-average particle diameter of the (P-3') was 148 μm. The melt viscosity of the (P-3') at 190°C, and the storage modulus at 130°C and that at 180°C are described in Table 2.

Comparative Example 4

A prepolymer solution (U-4') was yielded in the same way as in Production Example 9 except that instead of the polybutylene adipate (A2-1) in Production Example 9, the Mn of which was 1000, the following was used: a polyhexamethylene isophthalate diol having an Mn of 1000 (A2-6) (glass transition temperature: -36°C). Next, thermoplastic polyurethane resin particles (K-4') were then produced in the same way as in Example 1. The Mw of the (K-4') was 140,000, and the volume-average particle diameter was 147 $\mu$m. The melt viscosity of the (K-4') at 190°C, and the storage modulus at 130°C and that at 180°C are described in Table 2.

Furthermore, a thermoplastic urethane resin particle composition (P-4') was yielded in the same way as in Example 1. The volume-average particle diameter of the (P-4') was 148 $\mu$m. The melt viscosity of the (P-4') at 190°C, and the storage modulus at 130°C and that at 180°C are described in Table 2.

The respective SP values of the high molecular weight diols (A) used in Examples 1 to 17, and Comparative Examples 1 to 4 are shown in Tables 1 and 2.

Use was made of each of the thermoplastic urethane resin particle compositions (P-1) to (P-17) of Examples 1 to 17 for slush molding, and the thermoplastic urethane resin particle compositions (P-1') to (P-4') of Comparative Examples 1 to 4 for slush molding, and the composition was molded into skin bodies having plate thicknesses of 1.0 mm, and 0.5 mm, respectively, at 210°C in accordance with a method described below. The composition was measured about the rear-surface meltability of the skin body having the thickness of 1.0 mm, the 25°C tensile strength thereof, the 25°C elongation thereof, the 25°C rupture stress of the skin body having the thickness of 0.5 mm, and the -35°C elongation thereof, as well as the 25°C tensile strength and the elongation after a heat resistance test described below.

The results are shown in Tables 1 and 2.

[Table 1]

| | | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|
| Urethane resin particles (K) | | (K-) | (K-2) | (K-3) | (K-4) | (K-5) | (K-6) | (K-7) | (K-8) | (K-9) | (K-10) | (K-11) |
| Polyester diol (A1) | | A1-1 | A1-2 | A1-2 | A1-2 | A1-2 | A1-4 | A1-5 | A1-6 | A1-7 | A1-3 | A1-8 |
| Tg of polyester diol (A1) | | 20°C | 50°C | 50°C | 50°C | 50°C | 35°C | 25°C | 15°C | 5°C | 65°C | 10°C |
| Ratio by weight of A1: A1 x 100/(A1 + A2) | | 20% | 50% | 5% | 80% | 80% | 20% | 25% | 25% | 25% | 50% | 20% |
| High molecular weight diol (A2) | | A2-1 | A2-1 | A2-1 | A2-2 | A2-3 | A2-1 | A2-1 | A2-1 | A2-1 | A2-1 | A2-3 |
| Tg of polyester diol (A2) | | -60°C | -60°C | -60°C | -45°C | -55°C | -60°C | -60°C | -60°C | -60°C | -60°C | -55°C |
| Ratio by weight of A2: A2 x 100/(A1 + A2) | | 80% | 50% | 95% | 20% | 20% | 80% | 75% | 75% | 75% | 50% | 80% |
| Polyester diol (A3) | | - | - | - | - | - | - | - | - | - | - | - |
| Blend ratio by weight of (A1) to (A21) : A1/A21 | | - | - | - | - | - | - | - | - | - | - | - |
| Ratio by weight of A3 to A1: A3 x 100/A1 | | - | - | - | - | - | - | - | - | - | - | - |
| Solubility parameter | Polyester diol (A1) | 13 | 12.63 | 12.63 | 12.63 | 12.63 | 12.63 | 13 | 13 | 13 | 12.52 | 12.55 |
| | High molecular weight diol (A2) | 11.01 | 11.01 | 11.01 | 11.39 | 9.68 | 11.01 | 11.01 | 11.01 | 11.01 | 11.01 | 9.68 |
| | $\Delta$SP | 1.99 | 1.62 | 1.62 | 1.24 | 2.95 | 1.62 | 1.99 | 1.99 | 1.99 | 1.51 | 2.87 |
| 190°C Melt viscosity | Pa·s | 510 | 850 | 680 | 1600 | 1900 | 500 | 1900 | 1400 | 1300 | 1950 | 1100 |
| 130°C Storage modulus G' | dyn/cm$^2$ | $4.5 \times 10^6$ | $1.0 \times 10^7$ | $9.0 \times 10^6$ | $2.5 \times 10^7$ | $3.2 \times 10^7$ | $7.5 \times 10^6$ | $5.0 \times 10^7$ | $4.0 \times 10^6$ | $2.5 \times 10^5$ | $6.6 \times 10^7$ | $3.5 \times 10^6$ |
| 180°C Storage modulus G' | dyn/cm$^2$ | $3.0 \times 10^4$ | $4.5 \times 10^4$ | $3.6 \times 10^4$ | $6.0 \times 10^4$ | $6.5 \times 10^4$ | $1.5 \times 10^4$ | $8.0 \times 10^4$ | $5.0 \times 10^4$ | $5.5 \times 10^4$ | $9.0 \times 10^4$ | $4.2 \times 10^4$ |

(continued)

| | | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|
| Urethane resin particle composition (P) | | (P-1) | (P-2) | (P-3) | (P-4) | (P-5) | (P-6) | (P-7) | (P-8) | (P-9) | (P-10) | (P-11) |
| 190°C Melt viscosity | Pa·s | 100 | 140 | 120 | 350 | 420 | 100 | 490 | 370 | 290 | 490 | 150 |
| 130°C Storage modulus G' | dyn/cm² | $3.6 \times 10^6$ | $8.0 \times 10^6$ | $7.2 \times 10^6$ | $2.0 \times 10^7$ | $2.5 \times 10^7$ | $6.0 \times 10^6$ | $2.5 \times 10^7$ | $3.2 \times 10^6$ | $1.8 \times 10^6$ | $3.3 \times 10^7$ | $2.5 \times 10^6$ |
| 180°C Storage modulus G' | dyn/cm² | $8.0 \times 10^3$ | $1.5 \times 10^4$ | $9.0 \times 10^3$ | $2.0 \times 10^4$ | $2.5 \times 10^4$ | $5.0 \times 10^3$ | $3.5 \times 10^4$ | $1.5 \times 10^4$ | $1.8 \times 10^4$ | $3.0 \times 10^4$ | $1.8 \times 10^4$ |
| Meltability (1.0 mm) | Class | 5 | 5 | 5 | 5 | 5 | 5 | 4 | 5 | 5 | 4 | 5 |
| Tensile strength (1.0 mm) | MPa | 10 | 15 | 13 | 12 | 16 | 14 | 16 | 15 | 14 | 16 | 13 |
| Rupture stress (0.5 mm) | Kgf | 7 | 8 | 7 | 7 | 9 | 8 | 9 | 9 | 8 | 10 | 7 |
| Elongation (at 25°C) | % | 700 | 450 | 550 | 400 | 600 | 600 | 450 | 480 | 500 | 400 | 500 |
| Elongation (at -35°C) | % | 350 | 250 | 320 | 100 | 250 | 350 | 300 | 350 | 300 | 300 | 250 |
| Tensile strength after heat resistance test (at 130°C for 600 hours) | MPa | 4 | 5 | 6 | 5 | 7 | 5 | 4 | 4 | 5 | 6 | 4 |
| Tensile elongation after heat resistance test (at130°C for 600 hours) | % | 350 | 260 | 300 | 200 | 300 | 250 | 180 | 160 | 220 | 250 | 200 |

[Table 2]

| | Example 12 | Example 13 | Examples 14 | Examples 15 | Example 16 | Example 17 | Comparative Example 1 | Comparative Example 2 | Comparative Example 3 | Comparative Example 4 |
|---|---|---|---|---|---|---|---|---|---|---|
| Urethane resin particles (K) | (K-12) | (K-I3) | (K-14) | (K-15) | (K-16) | (K-17) | (K'-1) | (K'-2) | (K'-3) | (K'-4) |
| Polyester diol (A1) | A1-2 | A1-2 | A1-1 | A1-1 | A1-1 | A1-1 | A1-2 | A1-2 | A1-9 | A1-1 |
| Tg of polyester diol (A1) | 50°C | 50°C | 20°C | 20°C | 20°C | 20°C | 50°C | 50°C | -5°C | 20°C |
| Ratio by weight of A1: A1 x 100/(A1 + A2) | 50% | 50% | 20% | 20% | 20% | 20% | 5% | 80% | 50% | 20% |
| High molecular weight diol (A2) | A2-1 | A2-1 | A2-1 | A2-1 | A2-1 | A2-1 | A2-4 | A2-5 | A2-1 | A2-6 |
| Tg of polyester diol (A2) | -60°C | -60°C | -60°C | -60°C | -60°C | -60°C | -50°C | -65°C | -60°C | -36°C |
| Ratio by weight of A2: A2 x 100/(A1 + $A_2$) | 50% | 50% | 80% | 80% | 80% | 80% | 95% | 20% | 50% | 80% |
| Polyester diol (A3) | - | - | A3-1 | A3-2 | A3-3 | A3-1 | | - | - | - |
| Blend ratio by weight of (A1) to (A21) : A1/A21 | - | - | 1 | 0.5 | 5 | 1 | - | - | - | - |
| Ratio by weight of A3 to A1: A3 x 100/A1 | - | - | 10 | 20 | 20 | 100 | - | - | - | - |
| Solubility parameter — Polyester diol (A1) | 12.63 | 12.63 | 13 | 13 | 13 | 13 | 12.63 | 12.63 | 11.38 | 13 |
| Solubility parameter — High molecular weight diol (A2) | 11.01 | 11.01 | 11.01 | 11.01 | 11.01 | 11.01 | 11.48 | 9.50 | 11.01 | 11.6 |
| Solubility parameter — ΔSP | 1.62 | 1.62 | 1.99 | 1.99 | 1.99 | 1.99 | 1.15 | 3.13 | 0.37 | 1.4 |
| 190°C Melt viscosity — Pa·s | 600 | 1530 | 520 | 530 | 600 | 520 | 950 | 3000 | 550 | 600 |
| 130°C Storage modulus G' — $dyn/cm^2$ | $2.5 \times 10^6$ | $1.1 \times 10^7$ | $3.5 \times 10^6$ | $4.0 \times 10^6$ | $4.0 \times 10^7$ | $3.5 \times 10^6$ | $3.0 \times 10^6$ | $4.5 \times 10^6$ | $8.0 \times 10^5$ | $5.0 \times 10^6$ |

(continued)

| | | Example 12 | Example 13 | Examples 14 | Examples 15 | Example 16 | Example 17 | Comparative Example 1 | Comparative Example 2 | Comparative Example 3 | Comparative Example 4 |
|---|---|---|---|---|---|---|---|---|---|---|---|
| 184°C Storage modulus G' | dyn/cm$^2$ | $3.6 \times 10^4$ | $5.10 \times 10^4$ | $2.0 \times 10^4$ | $2.5 \times 10^4$ | $2.5 \times 10^4$ | $2.8 \times 10^4$ | $5.5 \times 10^4$ | $3.5 \times 10^5$ | $3.0 \times 10^4$ | $4.5 \times$ |
| Urethane resin particle composition (P) | | (P-12) | (P-13) | (P-14) | (P-15) | (P-16) | (P-17) | (P'-1) | (P'-2) | (P'-3) | (P'-4) |
| 190°C Melt viscosity | Pa·s | 110 | 220 | 100 | 100 | 100 | 100 | 225 | 750 | 130 | 140 |
| 130°C Storage modulus G' | dyn/cm$^2$ | $2.0 \times 10^6$ | $8.5 \times 10^6$ | $2.5 \times 10^6$ | $3.0 \times 10^6$ | $3.2 \times 10^6$ | $2.5 \times 10^6$ | $2.2 \times 10^6$ | $3.6 \times 10^6$ | $6.0 \times 10^5$ | $4.0 \times 10^6$ |
| 180°C Storage modulus G' | dyn/cm$^2$ | $1.5 \times 10^4$ | $2.0 \times 10^4$ | $7.0 \times 10^3$ | $1.0 \times 10^4$ | $8.0 \times 10^3$ | $7.0 \times 10^3$ | $1.8 \times 10^4$ | $1.2 \times 10^5$ | $1.0 \times 10^4$ | $1.8 \times 10^4$ |
| Meltability (1.0 mm) | Class | 5 | 5 | 5 | 5 | 5 | 5 | 5 | 3 | 5 | 5 |
| Tensile strength (1.0 mm) | MPa | 10 | 14 | 9 | 8 | 10 | 9 | 5 | 7 | 4 | 10 |
| Rupture stress (0.5 mm) | kgf | 6 | 7 | 6 | 5 | 6 | 5 | 3 | 3 | 2 | 5 |
| Elongation (at 25°C) | % | 800 | 600 | 750 | 800 | 750 | 750 | 400 | 320 | 300 | 550 |
| Elongation (at -35°C) | % | 400 | 300 | 400 | 400 | 350 | 350 | 220 | 180 | 120 | 20 |

(continued)

|  | | Example 12 | Example 13 | Examples 14 | Examples 15 | Example 16 | Example 17 | Comparative Example 1 | Comparative Example 2 | Comparative Example 3 | Comparative Example 4 |
|---|---|---|---|---|---|---|---|---|---|---|---|
| Tensile strength after heat resistance test (at 130°C for 600 hours) | MPa | 4 | 4 | 4 | 4 | 4 | 4 | 2 | 1 | 1 | 2 |
| Tensile elongation after heat resistance test (at 130°C for 600 hours) | % | 300 | 280 | 330 | 320 | 350 | 300 | 150 | 50 | 20 | 220 |

<Production of skin bodies>

In order to perform low-temperature molding, the thermoplastic urethane resin particle compositions (P-1) to (P-17), and (P-1') to (P-4'), for slush molding, were each filled into a Ni-electrocast mold which was a mold having a crimped pattern and heated beforehand to 210°C. After 10 seconds, an extra of the resin particle composition was discharged therefrom. After 60 seconds, the present system was cooled with water to produce a skin body (thickness: 1 mm).

Each skin body having a thickness of 0.5 mm was produced in the same way as described above except that the period (of the 10 seconds) after the filling was changed to 6 seconds.

<190°C Melt viscosity measuring method>

A flow tester, CFT-500, manufactured by SHIMADU CORPORATION was used to raise the temperature of each of the skin bodies at a constant rate under conditions described below, and measure the 190°C melt viscosity thereof.

Load: 5 kg
Die: cavity diameter: 0.5 mm, and length: 1.0 mm
Temperature-raising rate: 5°C/min.

<Measurement of storage moduli at 130°C and 180°C>

A dynamic viscoelastometer, "RDS-2", manufactured by Rheometric Scientific Inc. was used to measure the storage moduli of each of the measurement samples at 130°C and 180°C, respectively, under a condition that a frequency of 1 Hz was used.

The measurement sample was set to a tool of the meter, and then the temperature was raised to 200°C. At 200°C, the sample was allowed to stand still inside the tool for 1 minute to be melted. The sample was then cooled to be solidified, thereby causing the sample to adhere closely to the tool. Thereafter, the sample was measured. The range of temperatures for the measurement was from 50 to 200°C. The melt viscoelasticity was measured between the two temperatures to make it possible to give a temperature-G' curve, and a temperature-G" curve.

The respective storage moduli G' at 130°C and 180°C were read out from the temperature-G' curve.

Tool diameter: 8 mm

<Rear surface meltability>

The central region of the rear surfaces of each of the molded skin bodies was observed with the naked eye. The meltability was evaluated in accordance with the following decision criteria:

5: The rear surface was uniform and glossy.
4: The rear surface partially had the powder not melted, but was glossy.
3: The whole of the rear surface had irregularities, and was not glossy. The surface had no pinholes penetrating to reach the front surface.
2: The whole of the rear surface had irregularities in the form of powder, and further had one or more pinholes penetrating to reach the front surface.
1: The powder was not melted, so that a molded body was not obtained.

<Tensile strength and elongation measurements>

From each of the molded skin bodies, three tensile test pieces each having a dumbbell shape No. 1 according to JIS K 6301 were cut out. At the center of each of the test pieces, lines were marked at intervals of 40 mm. As the plate thickness of the piece, the minimum value was adopted from the respective thicknesses at 5 points that were each between the marked lines. This piece was fitted to an autograph in an atmosphere of 25°C, and then the piece was pulled at a rate of 200 mm/min. At or until the test piece ruptured, the rupture strength and the maximum elongation were calculated out. Additionally, each of the test pieces was fitted to the autograph in an atmosphere of -35°C, and then the piece was pulled at a rate of 200 mm/min. Until the test piece ruptured, the maximum elongation was calculated out.

<25°C Tensile strength and elongation measurements after heat resistance test>

Each of the molded skin bodies was treated in a wind-circulating drier at 130°C for 600 hours. Subsequently, the treated skin body was allowed to stand still at 25°C for 24 hours. Therefrom, three tensile test pieces each having a dumbbell shape No. 1 according to JIS K 6301 were cut out. At the center of each of the test pieces, lines were marked at intervals of 40 mm. As the plate thickness of the piece, the minimum value was adopted from the respective thicknesses at 5 points that were each between the marked lines. This piece was fitted to an autograph in an atmosphere of 25°C, and then the piece was pulled at a rate of 200 mm/min. At or until the test piece ruptured, the rupture strength and the maximum elongation were calculated out.

The thermoplastic urethane resin particle compositions (P-1) to (P-17) of Examples 1 to 17 for slush molding are better than the (P-1') to (P-4') of Comparative Examples 1 to 4 in all of the 210°C rear surface meltability, the 25°C tensile strength, the 25°C elongation, and the -35°C elongation, as well as the 25°C tensile strength and the 25°C elongation after the heat resistance test. Moreover, the (P-1) to (P-17) are very good in the 0.5 mm rupture strength; thus, the molded skin bodies can each be made into a thinner form. This matter demonstrates that about the (P-1) to (P-17), the low-temperature meltability thereof can be consistent with the tensile strength and the elongation thereof at a high level. Therefore, the (P-1) to (P-17) are each very good, in particular, as a material for an instrument panel.

INDUSTRIAL APPLICABILITY

A molded body molded from the thermoplastic urethane resin particle composition of the present invention, for example, a skin body thereof, is suitably used as an automobile interior matter, for example, an instrument panel, a door trim or some other skin body.

**Claims**

1.    A thermoplastic urethane resin (D) for thermal molding, which is a thermoplastic urethane resin yielded by causing high molecular weight diols (A) to react with a diisocyanate (B), wherein the high molecular weight diols (A) comprise a polyester diol (A1) having a number-average molecular weight of 800 to 5000, which is yielded by poly-condensing an aliphatic diol having 2 to 4 carbon atoms and an aromatic dicarboxylic acid, and which has a glass transition temperature, as measured according to the method described at paragraph [0020] of the present specification, of 0 to 70°C, and a high molecular weight diol (A2) having a number-average molecular weight of 800 to 5000, and having a solubility parameter, as measured according to the method described at paragraph [0021] of the present specification, lower than the solubility parameter of the (A1) by 1.2 to 3.0 and further having a glass transition temperature of -40 to -75°C.

2.    The urethane resin (D) according to claim 1, wherein the polyester diol (A1) is a polyester diol (A11) comprising, as essential components, ethylene glycol and one or more phthalic acids (G) selected from the group consisting of terephthalic acid, isophthalic acid, and orthophthalic acid.

3.    The urethane resin (D) according to claim 1 or 2, wherein the phthalic acid(s) (G) constituting the polyester diol (A1) is/are a mixture of terephthalic acid and isophthalic acid, or a mixture of terephthalic acid and orthophthalic acid.

4.    The urethane resin (D) according to any one of claims 1 to 3, wherein the high molecular weight diol (A2) is a polyester diol.

5.    The urethane resin (D) according to claim 4, wherein the high molecular weight diol (A2) is at least one selected from the group consisting of polyester diols each comprising, as essential components, ethylene glycol and an aliphatic dicarboxylic acid having 6 to 15 carbon atoms, and polyester diols each comprising, as essential components, an aliphatic diol having 4 to 10 carbon atoms, and an aliphatic dicarboxylic acid having 4 to 15 carbon atoms.

6.    The urethane resin (D) according to claim 4 to 5, wherein the high molecular weight diols (A) further comprise the following polyester diol (A3), and the content of the (A3) is from 5 to 10% by weight based on the weight of the (A1):

an polyester diol (A3) which is a polyester diol comprising, as essential components, ethylene glycol, an aliphatic diol having 4 to 10 carbon atoms, one or more phthalic acids (G) selected from the group consisting of terephthalic acid, isophthalic acid and orthophthalic acid, and an aliphatic dicarboxylic acid having 4 to 15 carbon atoms.

7. The urethane resin (D) according to any one of claims 1 to 6, wherein the ratio by weight of the (A1) to the (A2) (A1/A2) is from 5/95 to 80/20.

8. The urethane resin (D) according to any one of claims 1 to 7, wherein the resultant from the reaction is further caused to react with a low molecular weight diamine or low molecular weight diol (C).

9. The urethane resin (D) according to any one of claims 1 to 8, which has a melt viscosity, as measured according to the method described at paragraph [0089] of the present specification, of 500 to 2000 Pa·s at 190°C, a storage modulus G' of 2.0 x $10^6$ to 1.0 x $10^6$ dyn/cm$^2$ at 130°C, and a storage modulus G' of 1.0 x $10^3$ to 1.0 x $10^5$ dyn/cm$^2$ at 180°C, wherein the storage moduli are measured according to the method described at paragraph [0090] of the present specification.

10. Thermoplastic urethane resin particles (K) for thermal molding, comprising the thermoplastic urethane resin (D) for thermal molding recited in any one of claims 1 to 9.

11. A urethane resin particle composition (P) for slush molding, comprising the thermoplastic urethane resin particles (K) for thermal molding recited in claim 10 and an additive (F).

12. The urethane resin particle composition (P) for slush molding according to claim 11, which has a melt viscosity, as measured according to the method described at paragraph [0089] of the present specification, of 100 to 500 Pa·s at 190°C, a storage modulus G' of 1.0 x $10^6$ to 5.0 x $10^7$ dyn/cm$^2$ at 130°C, and a storage modulus G' of 1.0 x $10^3$ to 1.0 x $10^5$ dyn/cm$^2$ at 180°C, wherein the storage moduli are measured according to the method described at paragraph [0090] of the present specification.

13. A urethane resin molded body obtained by thermally molding the thermoplastic urethane resin particles (K) for thermal molding recited in claim 10, or the urethane resin particle composition (P) for slush molding recited in claim 11.

**Patentansprüche**

1. Thermoplastisches Urethanharz (D) zum Thermoformen, welches ein thermoplastisches Urethanharz ist, das durch Umsetzen von Diolen mit hohem Molekulargewicht (A) mit einem Diisocyanat (B) erhalten wird, wobei die Diole mit hohem Molekulargewicht (A) ein Polyesterdiol (A1) mit einem mittleren Molekulargewicht (Zahlenmittel) von 800 bis 5000, welches durch Polykondensation eines aliphatischen Diols mit 2 bis 4 Kohlenstoffatomen und einer aromatischem Dicarbonsäure erhalten wird, und eine Glasübergangstemperatur, gemessen gemäß dem in Paragraph [0020] der vorlegenden Beschreibung beschriebenen Verfahren, von 0 bis 70 °C aufweist, und ein Diol mit hohem Molekulargewicht (A2), welches ein mittleres Molekulargewicht (Zahlenmittel) von 800 bis 5000 aufweiset und einen Löslichkeitsparameter, gemessen gemäß dem in Paragraph [0021] der verliegenden Beschreibung beschriebenen Verfahren, aufweiset, der um 1,2 bis 3,0 niedriger ist als der Löslichkeitsparameter von (A1), und welches ferner eine Glasübergangstemperatur von -40 bis -75 °C aufweist, umfassen.

2. Urethanharz (D) gemäß Anspruch 1, wobei das Polyesterdiol (A1) ein Polyesterdiol (A1) ist, welches als wesentliche Komponenten Ethylenglykol und oder mehrere Phthalsäuren (G), ausgewählt aus der Gruppe bestehend aus Terephthalsäure, Isophthalsäure und Orthophthalsäure, umfasst.

3. Urethanharz (D) gemäß Anspruch 1 oder 2, wobei die Phthalsäure(n) (G), welche das Polyesterdiol (A1) bildet/bilden, eine Mischung aus Terephthalsäure und Isophthalsäure oder Mischung aus Terephthalsäure und Orthophthalsäure ist/sind.

4. Urethanharz (D) gemäß irgendeinem der Ansprüche 1 bis 3, wobei das Diol mit hohem Molekulargewicht (A2) ein Polyesterdiol ist.

5. Urethanharz (D) gemäß Anspruch 4, wobei das Diol mit hohem Molekulargewicht (A2) zumindest ein Diol ist, welches aus der Gruppe bestehend aus Polyesterdiolen, weicht jeweils als wesentliche Komponenten Ethylenglykol und eine aliphatische Dicarbonsäure mit 6 bis 15 Kohlenstoffatomen umfassen, und Polyesterdiolen, welche jeweils als wesentliche Komponenten ein aliphatisches Diol mit 4 bis 10 Kohlenstoffatomen und eine aliphatische Dicarbonsäure mit 4 bis 15 Kohlenstoffatomen umfassen, ausgewählt ist.

6. Urethanharz (D) gemäß Anspruch 4 bis 5, wobei die Diole mit hohem Molekulargewicht (A) ferner das folgende Polyesterdiol (A3) umfassen, und der Gehalt an (A3) 5 bis 10 Gew.-%, bezogen auf das Gewicht von (A1), beträgt:

ein Polyesterdiol (A3), weiches ein Polyesterdiol ist, welches als wesentliche Komponenten Ehylenglykol, ein aliphatisches Diol mit 4 bis 10 Kohlenstoffatomen, oder mehrere Phthalsäuren (G), ausgewählt aus der Gruppe bestehend aus Terephthalsäure, Isophthalsäure und Orthophthalsäure, und eine aliphatische Dicarbonsäure mit 4 bis 15 Kohlenstoffatomen umfasst.

7. Urethanharz (D) gemäß irgendeinem der Ansprüche 1 bis 6, das von (A1) zu (A2) (A1/A2) 5/95 bis 80/20 beträgt.

8. Urethanharz (D) gemäß irgendeinem der Ansprüche 1 bis 7, wobei das Reaktionsprodukt aus der Reaktion außerdem mit einem Diamin mit niedrigem Molekulargewicht oder einem Diol mit niedrigem Molekulargewicht (C) umgesetzt wird.

9. Urethanharz (D) gemäß irgendeinem der Ansprüche 1 bis 8, welches eine Schmelzviskosität, gemessen gemäß dem in Paragraph [0089] der vorliegenden Beschreibung beschriebenen Verfahren, von 500 bis Pa·s bei 190 °C, ein Speichermodul G' von $2,0 \times 10^6$ bis $1,0 \times 10^6$ dyn/cm$^2$ bei 130 °C und ein Speichermodul G' von $1,0 \times 10^3$ bis $1,0 \times 10^5$ dyn/cm$^2$ bei 180 °C aufweist, die Speichermoduin gemäß dem in Paragraph [0090] der vorliegenden Beschreibung Verfahren werden.

10. Thermoplastische Urethanharzpartikei (K) zum Thermoformen, welche das thermoplastische Urethanharz (D) zum Thermoformen gemäß irgendeinem der Anspruche 1 bis 9 umfassen.

11. Urethanharzpartikel-Zusammensetzung (P) zum Slush-Molding, welche die thermoplastischen Urethanharzpartikel (K) zum Thermoformen gemäß Anspruch 10 und ein Additiv (F) umfasst.

12. Urethanharzpartikel-Zusammensetzung (P) zum Slush-Molding gemäß Anspruch 11, welche eine Schmelzviskosität, gemessen gemäß dem in Paragraph [0089] der vorliegenden Beschreibung beschriebenen Verfahren, von 100 bis 500 Pa·s bei 190 °C, ein Speichermodul G' von $1,0 \times 10^6$ bis $5,0 \times 10^7$ dyn/cm$^2$ bei 130 °C und ein Speichermodul G' von $1,0 \times 10^3$ bis $1,0 \times 10^5$ dyn/cm$^2$ bei 180 °C aufweist, wobei die Speichermoduln gemäß dem in Paragraph [0090] der vorlegenden Beschreibung beschriebenen Verfahren werden.

13. Aus Urethanharz geformter welcher durch Thermoformen der thermoplastischen Urethanharzpartikel (K) zum Thermoformen gemäß Anspruch 10 oder der Urethanharzpartikel-Zusammensetzung (P) zum Thermoformen Anspruch 11 erhalten wird.

## Revendications

1. Résine d'uréthane thermoplastique (D) pour moulage thermique, qui est une résine d'uréthanne thermoplastique obtenue en faisant réagir des diols de poids moléculaire élevé (A) avec un diisocyanate (B), dans laquelle les diols de poids moléculaire élevé (A) comprennent un diol de polyester (A1) ayant un poids moléculaire moyen en nombre de 800 à 5000, qui est obtenu par polycondensation d'un diol aliphatique ayant de 2 à 4 atomes de carbone et d'un acide dicarboxylique aromatique, et qui a une temperature de transition vitreuse, mesurée selon la méthode décrite dans le paragraphe [0020] de la présente demande, de 0 à 70 °C, et un diol de poids moléculaire élevé (A2) ayant un poids moléculaire moyen en nombre de 800 à 5000, et ayant un paramètre de solubilité, mesuré selon la méthode décrite dans le paragraphe [0021] de la présente demande, inférieur au paramètre de solubilité de (A1) de 1, 2 à 3,0 fois, est avant en outre une temperature de transition vitreuse de -40 à 75 °C.

2. Résine d'uréthane (D) selon la revendication 1, dans laquelle le diol de polyester (A1) est un diol de polyester (A11) comprenant, comme composants principaux, de l'éthylène glycol et un ou plusieurs acides phtaliques (G) choisis dans le groupe constitué par l'acide téréphtalique, l'acide isophtalique et l'acide orthophtalique.

3. Résine d'uréthane (D) selon la revendication 1 ou 2, dans laquelle le ou les acides phtaliques (G) constituant le diol de polyester (A1) est/sont un mélangé d'acide téréphtalique et d'acide isophtalique, ou un mélange d'acide téréphtalique et d'acide orthophtalique.

4. Résine d'uréthane (D) selon l'une quelconque des revendications 1 à 3, dans laquelle le diol de poids moléculaire élevé (A2) est un diol de polyester.

5. Résine d'uréthane (D) selon la revendication 4, dans lequel le diol de poids moléculaire élevé (A2) est au moins un diol choisi dans le groupe constitué par les diols de Polyester comprenant chacun, comme composants principaux, de l'éthylène glycol et un acide dicarboxylique aliphatique ayant de 6 à 15 atones de carbone, et les diols de polyester comprenant chacun, en tant que composants principaux, un diol aliphatique ayant de 4 à 10 atones de carbone et un acide dicarboxylique aliphatique ayant de 4 à 15 atomes de carbone.

6. Résine d'uréthane (D) selon l'une quelconque des revendications 4 à 5, dans laquelle les diols de poids moléculaire élevé (A) comprennent en outre le diol de polyester (A3) suivant, et la tenseur en (A3) est de 5 à 10 % en poids par rapport au poids de (A1) :

   un diol de polyester (A3) qui est un diol de polyester comprenant, comme composants essentiels, de l'éthylène glycol, un diol aliphatique avant de 4 à 10 atomes de carbone, un ou plusieurs acides phtaliques (G) choisis dans le groupe constitué par l'acide téréphtalique, l'acide isophtalique et l'acide orthophtalique, et un acide dicarboxylique aliphatique ayant de 4 à 15 atomes de carbone.

7. Résine d'uréthane (D) selon l'une quelconque des revendications 1 à 6, dans laquelle le rapport en poids de (A1) à (A2) (A1/A2) est de 5/95 à 80/20.

8. Résine d'uréthane (D) selon l'une quelconque des revendications 1 à 7, dans laquelle le produit résultant de la réaction est en outre poussé à réagir avec une diamine de faible poids moléculaire ou un diol de faible poids moléculaire (C).

9. Résine d'uréthane (D) selon l'une quelconque des revendications 1 à 8, qui a une viscosité à l'état fondu, mesurée selon la méthode décrite dans le paragraphe [0089] de la présente demande, de 500 à 2000 Pa·s à 190 °C, un module de stockage G' de $2,0 \times 10^6$ à $1,0 \times 10^6$ dyn/cm$^2$ à 130 °C, et un module de stockage G' de $1,0 \times 10^3$ à $1,0 \times 10^5$ dyn/cm$^2$ à 180 °C, dans laquelle les modules de stockage sont mesurés selon la méthode décrite dans le paragraphe [0090] de la présente demande.

10. Particules de résine d'uréthane thermoplastique (K) pour moulage thermique, comprenant la résine d'uréthane thermoplastique (D) pour moulage thermique décrite selon l'une quelconque des revendications 1 à 9.

11. Composition de particules de résine d'uréthane (P) pour moulage par embouage, comprenant les particules de résine d'uréthane thermoplastique (K) pour moulage thermique décrites selon la revendication 10 et un additif (F).

12. Composition de particules de résine d'uréthane (P) pour moulage par embouage selon la revendication 11, qui a une viscosité à l'état fondu, mesurée selon la méthode décrite dans le paragraphe [0089] de la présente demande, de 100 à 500 Pa·s à 190 °C, un module de stockage G' de $1,0 \times 10^6$ à $5,0 \times 10^7$ dyn/cm$^2$ à 130 °C, et un module de stockage G' de $1,0 \times 10^3$ à $1,0 \times 10^5$ dyn/cm$^2$ à 180 °C, dans laquelle les modules de stockage sont mesurés selon la méthode décrite dans le paragraphe [0090] de la présente demande.

13. Corps moulé en résine d'uréthane obtenu par moulage thermique des particules de résine d'uréthane thermoplastique (K) pour moulage thermique décrites selon la revendication 10, ou de la composition de particules de résine d'uréthane (P) pour moulage par embouage décrite selon la revendication 11.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10259369 A
- JP 2010150535 A
- JP 2010189633 A
- CA 2678773 A

**Non-patent literature cited in the description**

- **ROBERT F. FEDORS.** *POLYMER ENGINEERING AND FEBRUARY,* 1974, vol. 14 (2), 151-153